# EUROPÄISCHE PATENTSCHRIFT

(11) **EP 4 569 368 B1**
(45) Veröffentlichungstag und Bekanntmachung des Hinweises auf die Patenterteilung: **09.12.2026**
(21) Anmeldenummer: 23748505.7
(22) Anmeldetag: 26.07.2023
(51) Int. Cl.: G02B 26/08, G02B 26/10, H04N 9/31, G03B 21/00

(54) **VERFAHREN UND STEUERUNGSVORRICHTUNG ZUR TRAJEKTORIENREGELUNG EINES LISSAJOUS-MIKROSCANNERS**
METHOD AND CONTROL APPARATUS FOR REGULATING THE TRAJECTORY OF A LISSAJOUS MICROSCANNER
PROCÉDÉ ET APPAREIL DE COMMANDE POUR RÉGULER LA TRAJECTOIRE D'UN MICROSCANNER DE LISSAJOUS

(30) Priorität: 08.08.2022 DE 102022119946
(43) Veröffentlichungstag der Anmeldung: 18.06.2025
(73) Patentinhaber: OQmented GmbH, 25524 Itzehoe (DE)
(72) Erfinder: REHER, Marcel, 24114 Kiel (DE); BLICHARSKI, Peter, 45134 Essen (DE); HOFMANN, Ulrich, 25524 Itzehoe (DE); VON WANTOCH, Thomas, 24159 Kiel (DE)
(74) Vertreter: Platzöder, Michael Christian
(86) Internationale Anmeldenummer: PCT/EP2023/070742
(87) Internationale Veröffentlichungsnummer: WO 2024/033087

(56) Entgegenhaltungen:
- WO-A1-2022/100846
- US-A1- 2005 280 879
- US-A1- 2012 224 235
- US-A1- 2022 204 339

## Beschreibung

Die vorliegende Erfindung betrifft ein Verfahren und eine Steuereinrichtung zum Betrieb eines Lissajous-Mikroscannersystems, ein Computerprogramm(produkt) zum Betrieb der Steuereinrichtung, sowie ein auf der Steuereinrichtung beruhendes Strahlablenksystem.

Bei Mikroscannern, die in der Fachsprache insbesondere auch als "MEMS-Scanner", "MEMS-Spiegel" oder auch "Mikrospiegel" oder im Englischen insbesondere als "microscanner" bzw. "micro-scanning mirror" oder "MEMS mirror" bezeichnet werden, handelt es sich um mikro-elektro-mechanische Systeme (MEMS) oder genauer um mikro-optoelektro-mechanische Systeme (MOEMS) aus der Klasse der Mikrospiegelaktoren zur dynamischen Modulation von elektromagnetischer Strahlung, insbesondere von sichtbarem Licht. Je nach Bauart kann die modulierend wirkende Bewegung eines Einzelspiegels translatorisch oder um zumindest eine Achse rotatorisch erfolgen. Im ersten Fall wird eine phasenschiebende Wirkung, im zweiten Fall die Ablenkung der einfallenden elektromagnetischen Strahlung erzielt. Im Weiteren werden Mikroscanner betrachtet, bei denen die modulierend wirkende Bewegung eines Einzelspiegels, zumindest auch, rotatorisch erfolgt. In Abgrenzung zu Spiegelarrays, bei denen die Modulation von einfallendem Licht über das Zusammenwirken mehrerer Spiegel auf einem einzigen MEMS-Bauelement erfolgt, wird die Modulation bei Mikroscannern typischerweise über einen einzelnen Spiegel je MEMS-Bauelement (Mikroscanner) erzeugt.

Mikroscanner können somit insbesondere zur Ablenkung von elektromagnetischer Strahlung eingesetzt werden, um mittels eines Ablenkelements ("Spiegel") einen darauf einfallenden elektromagnetischen Strahl bezüglich seiner Ablenkrichtung zu modulieren. Das kann insbesondere dafür genutzt werden, eine Lissajous-Projektion des Strahls in ein Beobachtungsfeld bzw. Projektionsfeld zu bewirken. So lassen sich beispielsweise bildgebende sensorische Aufgaben lösen oder auch Display-Funktionalitäten realisieren. Darüber hinaus können solche Mikroscanner auch dazu eingesetzt werden, Materialien in vorteilhafter Weise zu bestrahlen, insbesondere zu deren Bearbeitung. Mögliche andere Anwendungen liegen im Bereich der Beleuchtung oder Ausleuchtung bestimmter offener oder geschlossener Räume oder Raumbereiche mit elektromagnetischer Strahlung, beispielsweise im Rahmen von Scheinwerferanwendungen.

Mikroscanner bestehen in vielen Fällen aus einer Spiegelplatte (Ablenkplatte), die seitlich an elastisch dehnbaren Federn aufgehängt ist. Man unterscheidet einachsige Spiegel, die vorzugsweise nur um eine einzige Achse drehbar aufgehängt sein sollen, von zweiachsigen und mehrachsigen Spiegeln, bei denen Rotationen, insbesondere rotatorische Oszillationen, um eine entsprechende Anzahl verschiedener Achsen möglich sind, insbesondere simultan.

Ein Mikroscannersystem zum Ablenken eines elektromagnetischen Strahls kann somit insbesondere einen zweiachsigen Mikroscanner, also Mikroscanner mit zwei verschiedenen, insbesondere zueinander orthogonalen, Schwingungsachsen oder eine Kombination von mehreren einzelnen, insbesondere zwei, einachsigen Mikroscannern aufweisen, die so angeordnet sind, dass der einfallende Strahl nacheinander durch die verschiedenen einzelnen Mikroscanner des Mikroscannersystems abgelenkt werden kann. Bei einem Mikroscannersystem mit einer Kombination aus zwei oder drei einachsigen Mikroscannern können deren Schwingungsachsen insbesondere paarweise orthogonal zueinander liegen.

Sowohl im Falle bildgebender Sensorik als auch im Falle einer Display-Funktion dient ein mehrachsiges Mikroscannersystem dazu, elektromagnetische Strahlung wie z.B. einen Laserstrahl oder aber einen geformten Strahl einer beliebigen anderen Quelle elektromagnetischer Strahlung mindestens zweidimensional, z.B. horizontal und vertikal, abzulenken, um damit eine Objektoberfläche innerhalb eines Beobachtungsfeldes abzutasten bzw. auszuleuchten. Insbesondere kann dies so erfolgen, dass der gescannte Laserstrahl eine rechteckige Fläche auf einer Projektionsfläche im Projektionsfeld überstreicht. Somit kommen bei diesen Anwendungsfällen Mikroscannersysteme mit zumindest zweiachsigem Mikroscanner oder mit mehreren, insbesondere zwei, im optischen Pfad hintereinandergeschalteten einachsigen Mikroscannern zum Einsatz. Der Wellenlängenbereich der abzulenkenden Strahlung kann grundsätzlich aus dem gesamten Spektrum von kurzwelliger UV-Strahlung, über den VIS-Bereich, NIR-Bereich, IR-Bereich, FIR-Bereich bis hin zu langwelliger Terraherz- und Radarstrahlung ausgewählt sein.

Als Antriebe werden typischerweise elektrostatische, elektromagnetische, piezoelektrische, thermische oder andere Aktuatorprinzipien eingesetzt. Die Spiegelbewegung kann dabei insbesondere quasistatisch (insbesondere nichtresonant) oder resonant erfolgen, letzteres insbesondere um größere Schwingungsamplituden, größere Auslenkungen und höhere optische Auflösungen zu erreichen. Außerdem lassen sich im resonanten Betrieb grundsätzlich auch der Energieverbrauch minimieren oder Vorteile insbesondere in Bezug auf Stabilität, Robustheit, Fertigungsausbeute, usw. erzielen. Typisch sind Scanfrequenzen von 0 Hz (quasistatisch) bis hin zu über 100 kHz (in Resonanz).

Obwohl die hierin beschriebenen Mikroscannersysteme und Mikroscanner grundsätzlich in vielen verschiedenen Bereichen sinnvoll und erfolgreich eingesetzt werden können, wird allein zum Zwecke der Erläuterung der Lösung nachfolgend insbesondere auf ihre Anwendung im Bereich der Laser-Projektions-Displays eingegangen, ohne dass dies als eine Einschränkung des Anwendungsbereichs zu interpretieren wäre.

In vielen bekannten Fällen handelt es sich bei mikroscannerbasierten Laser-Projektions-Displays um sogenannte Rasterscan-Displays, bei denen eine erste Strahlablenkachse bei hoher Frequenz in Resonanz (typischerweise 15 kHz bis 30 kHz) betrieben wird (schnelle Achse), um die Horizontalablenkung zu erzeugen und eine zweite Achse bei niedriger Frequenz (typischerweise 30 Hz bis 60 Hz) quasistatisch betrieben wird, um die Vertikalablenkung zu erzeugen. Die Trajektorie eines derart abgelenkten Strahls entspricht somit einem fest vorgegebenen rasterförmigen Linienmuster. Es wird dabei typischerweise 30- bis 60-mal pro Sekunde reproduziert.

Ein anderer Ansatz wird in den sogenannten Lissajous-Mikroscannern bzw. Lissajous-Mikroscannersystemen, insbesondere auch bei Lissajous-Scan-Displays verwendet. Dort werden beide Achsen üblicherweise in Resonanz betrieben und dabei eine Trajektorie in Form einer Lissajous-Figur erzeugt. Auf diese Weise lassen sich in beiden Achsen große Amplituden erreichen. Insbesondere die Vertikalablenkung kann daher sehr viel größer sein als bei einem Rasterscanner. Entsprechend kann bei einem Lissajous-Mikroscanner, insbesondere einem Lissajous-Scan-Display, meist eine deutlich höhere optische Auflösung erzielt werden als bei einem Raster-Scan-Display, insbesondere in vertikaler Richtung.

Aus der EP 2 514 211 B1 ist eine Ablenkeinrichtung für ein Projektionssystem zum Projizieren von Lissajous-Figuren auf ein Beobachtungsfeld bekannt, die ausgebildet ist, einen Lichtstrahl um mindestens eine erste und eine zweite Ablenkachse zur Erzeugung von Lissajous-Figuren umzulenken.

WO 2022/100846 A1 betrifft eine Lissajous-Doppelachsen-Abtastkomponente, die einen Außenrahmen, ein erstes Paar von Stützen, ein zweites Paar von Stützen, einen Innenrahmen, einen Spiegel, eine Sensorvorrichtung, eine Steuereinheit und einen Speicher umfasst. Der Speicher speichert mehrere Tupel, die jeweils einen ersten axialen Vorspannungsfrequenzwert, einen zweiten axialen Vorspannungsfrequenzwert und eine Phasendifferenz zwischen den tatsächlichen Antriebsfrequenzen (d. h. einer ersten axialen Vorspannungsfrequenz und einer zweiten axialen Vorspannungsfrequenz) des Spiegels enthalten. Die Steuereinheit ist mit der Sensoranordnung gekoppelt, um Signale zu empfangen, die die aktuellen Resonanzfrequenzen des Spiegels anzeigen, und ist so konfiguriert, dass sie eines der Tupel aus dem Speicher auf der Grundlage der von der Sensoranordnung empfangenen Signale auswählt und die angelegten Vorspannungsfrequenzen und deren Phasendifferenz entsprechend dem ausgewählten Tupel einstellt.

US 2012/224235 A1 betrifft eine zweidimensionale Lichtabtastvorrichtung. Sie umfasst: einen Deflektor, der mit einer Resonanzfrequenz in einer Hauptabtastrichtung und einer von der Hauptabtastrichtung verschiedenen Nebenabtastrichtung angetrieben wird; einen Positionssensor zum Erfassen einer Abtastposition des Deflektors; einen Resonanzfrequenz-Vorhersageabschnitt zum Vorhersagen der Resonanzfrequenz des Deflektors; und eine Ablenkansteuerungsvorrichtung zum: Zeichnen einer Lissajous-Figur, in der sich die Abtastbahnen des Ablenkelements für ein Bild nicht überlappen, Speichern einer Vielzahl von Paaren aus jeweiligen Frequenzverhältnissen von Ansteuersignalen in der Nebenabtastrichtung zu Ansteuersignalen in der Hauptabtastrichtung und jeweiligen Phasen der Ansteuersignale in der Nebenabtastrichtung in Bezug auf die Ansteuersignale in der Hauptabtastrichtung; ein Paar aus einem Frequenzverhältnis und einer Phase auszuwählen; und den Ablenker mit einem Ansteuersignal zu steuern.

US 2022/204339 A1betrifft eine mikroelektromechanische Vorrichtung (MEMS) verfügt über eine Anordnung von Mikrospiegeln und eine Steuerschaltung, um die Mikrospiegel synchron mit einer Resonanzfrequenz zu drehen. Eine Anordnung von Heizwiderständen wird verwendet, um die Anordnung von Mikrospiegeln zu erwärmen und Änderungen der Resonanzfrequenz aufgrund von Temperaturänderungen auszugleichen. Ein Temperatursensor ist in der Nähe des Chipgehäuses angebracht, um die Temperatur in der Nähe der Anordnung von Mikrospiegeln zu erfassen. Eine Temperatursteuerschaltung, die mit dem Temperatursensor und der Anordnung von Heizwiderständen gekoppelt ist, versorgt die Anordnung von Heizwiderständen mit Strom als Reaktion auf eine Temperaturänderung, die die Resonanzfrequenz verändert.

US 2005/280879 A1 betrifft ein resonantes MEMS-Abtastsystem, das einen MEMS-Scanner bei seiner Resonanzfrequenz betreibt, um den Abtastwinkel zu maximieren und den Stromverbrauch zu minimieren. Eine Steuereinheit umfasst eine Phasenregelschleife, eine Amplituden-Servoregelschleife und eine Resonanzfrequenz-Servoregelschleife. Ein Mikroprozessor steuert die Schleifen und übernimmt bei bestimmten Bedingungen, wie z. B. beim Start, die Übersteuerung. Die Resonanzfrequenz wird dynamisch thermisch getrimmt, sodass das Gerät mit einem höheren Q-Faktor betrieben werden kann. Die Phasenregelschleife arbeitet in einem Vorverriegelungszustand, um einen schnelleren Start zu ermöglichen. Die Resonanzfrequenz wird im Leerlauf und beim Start im offenen Regelkreis gesteuert. Die Ansteuerungsspannung wird beim Start hoch eingestellt, um einen schnellen Anstieg des Scanwinkels zu erreichen.

Der vorliegenden Erfindung liegt die Aufgabe zugrunde, die Ansteuerung von Lissajous-Mikroscannern zu deren Betrieb, insbesondere hinsichtlich von Anwendungen im Bereich der Projektions-Displays, weiter zu verbessern, insbesondere im Hinblick auf eine möglichst gleichmäßige Ausleuchtung des Beobachtungsfelds.

Die Lösung dieser Aufgabe wird gemäß der Lehre der unabhängigen Ansprüche erreicht. Verschiedene Ausführungsformen und Weiterbildungen der Lösung sind Gegenstand der Unteransprüche.

Ein erster Aspekt der Lösung betrifft ein Verfahren zur Trajektorienregelung bei einem mehrachsigen Mikroscannersystem. Das Verfahren weist auf: Ansteuern einer Antriebseinrichtung für das Mikroscannersystem derart, dass dieses veranlasst wird, eine erste rotatorische Oszillation eines Ablenkelements des Mikroscannersystems um eine erste Schwingungsachse mittels einer Anregung mit einer ersten Antriebsfrequenz und simultan zur ersten Oszillation eine zweite rotatorische Oszillation eines Ablenkelements des Mikroscannersystems um eine zur ersten Schwingungsachse orthogonale zweite Schwingungsachse mittels einer Anregung mit einer zweiten Antriebsfrequenz anzutreiben. Dabei erfolgt die Ansteuerung über eine Mehrzahl von aufeinanderfolgenden Zeitintervallen hinweg im Sinne einer Regelung derart, dass:
(i) in jedem der Zeitintervalle für seine jeweilige Dauer die erste und die zweite Antriebsfrequenz jeweils, insbesondere durch einen Phasenregelkreis, stabil auf einer jeweiligen bestimmten ersten bzw. zweiten Soll-Frequenz gehalten werden, wobei diese beiden Soll-Frequenzen ein diesem Zeitintervall zugeordnetes Frequenzpaar bilden und sich die jeweils zugeordneten Frequenzpaare von zumindest zwei unmittelbar aufeinanderfolgenden Zeitintervallen bezüglich der ersten Soll-Frequenz und/oder der zweiten Soll-Frequenz voneinander unterscheiden; und
(ii) für ein jeweiliges Zeitintervall das ihm zugeordnete Frequenzpaar in Abhängigkeit von einem sensorisch erfassten Wert zumindest einer physikalischen Größe, die in einem Abhängigkeitsverhältnis mit der jeweiligen Resonanzfrequenz bezüglich zumindest einer der Schwingungsachsen steht, gemäß einer Auswahlvorschrift aus einer vorbestimmten diskreten Menge von mehreren unterschiedlichen Frequenzpaaren so ausgewählt wird, dass das ausgewählte Frequenzpaar bezüglich zumindest einer seiner beiden Frequenzen um eine jeweilige Frequenzabweichung von der gemäß dem Abhängigkeitsverhältnis zu dem erfassten Wert der zumindest einen Größe korrespondierenden Resonanzfrequenz zur selben Schwingungsachse abweicht.

Hierbei wird zumindest eines der Frequenzpaare {*f₁; f₂*} der Menge so bestimmt, dass ausgehend von einer Phasendurchlauffrequenz *fᵣₑₛ* , die zu einer geschlossenen Lissajous-Trajektorie (835) für ein Paar {*f*_{0,1}, *f*_{0,2}} von möglichen Resonanzfrequenzen des Mikroscannersystems (801) für die beiden Oszillationen korrespondiert, und mit |*n*_{Δ}| >0 gilt: ${f}_{1} = {f}_{0 , 1} + Δ {f}_{1} mit Δ {f}_{1} = \frac{1}{{n}_{Δ} ⋅ {n}_{2}} ⋅ {f}_{res}$ ${f}_{2} = {f}_{0 , 2} + Δ {f}_{2} mit Δ {f}_{2} = \frac{1}{{n}_{Δ} ⋅ {n}_{1}} ⋅ {f}_{res} ,$ wobei und n₁, n₂ ≥ 1 jeweils ganze Zahlen und teilerfremd sind, so dass gilt: ${f}_{0 , 1} = {n}_{1} ⋅ {f}_{res} und {f}_{0 , 2} = {n}_{2} ⋅ {f}_{res} .$

Unter dem Begriff "Mikroscannersystem" (und Abwandlungen davon), wie hierin verwendet, ist eine Vorrichtung oder ein aus mehreren zusammenwirkenden Vorrichtungen aufgebautes System zu verstehen, das bzw. die zumindest einen Mikroscanner aufweist. Insbesondere sind demgemäß sowohl ein einzelner, insbesondere zweiachsiger, Mikroscanner als auch eine Anordnung mit zwei oder mehr, insbesondere einachsigen, Mikroscannern, die konfiguriert ist, einen einfallenden elektromagnetischen Strahl sequenziell mittels der zwei oder mehr Mikroscanner abzulenken, jeweils ein Mikroscannersystem.

Unter dem Begriff "Ablenkelement" (und Abwandlungen davon), wie hierin verwendet, ist insbesondere ein Körper zu verstehen, der eine reflektierende Fläche (Spiegelfläche) aufweist, die glatt genug ist, dass an der Spiegelfläche reflektierte elektromagnetische Strahlung, z.B. sichtbares Licht, nach dem Reflexionsgesetz seine Parallelität behält und somit ein Abbild entstehen kann. Die Rauheit der Spiegelfläche muss dafür kleiner sein als etwa die halbe Wellenlänge der elektromagnetischen Strahlung. Das Ablenkelement kann insbesondere als Spiegelplatte mit zumindest einer Spiegelfläche ausgebildet sein oder eine solche aufweisen. Insbesondere kann die Spiegelfläche selbst aus einem anderen Material bestehen als der sonstige Körper des Ablenkelements, z.B. aus einem Metall, insbesondere einem (z.B. per chemischer Gasphasenabscheidung (CVD) oder Sputtern) abgeschiedenen Metall. Bei dem vorgenannten lösungsgemäßen Mikroscannersystem können die erste Oszillation und die zweite Oszillation sich entweder auf ein selbes, dann mehrachsiges, Ablenkelement des Mikroscannersystems beziehen, oder aber auf verschiedene in einem selben Strahlengang angeordnete Ablenkelemente, insbesondere Ablenkelemente von einachsigen Mikroscannern des Mikroscannersystems.

Unter dem Begriff "Lissajous-Projektion" (und Abwandlungen davon), wie hierin verwendet, ist insbesondere eine Abtastung (Scanning) eines Beobachtungsfelds mit Hilfe von elektromagnetischer Strahlung zu verstehen, die durch zumindest zwei zueinander orthogonale sinusförmige Schwingungen (Oszillationen) einer die Strahlung in das Beobachtungsfeld ablenkenden Ablenkvorrichtung, insbesondere eines zumindest zweiachsigen Mikroscannersystems, bewirkt wird.

Unter dem Begriff "nichtlineare Lissajous-Projektion" (und Abwandlungen davon), wie hierin verwendet, ist als Sonderfall einer Lissajous-Projektion (und somit hierin auch unter den Begriff "Lissajous-Projektion" fallend) insbesondere eine Abtastung (Scanning) bzw. Ausleuchtung eines Beobachtungsfelds mit Hilfe von elektromagnetischer Strahlung zu verstehen, die durch zumindest zwei jeweils zueinander orthogonale sinusförmige Schwingungen um je eine zugeordnete Schwingungsachse einer die Strahlung in das Beobachtungsfeld ablenkenden Ablenkvorrichtung, insbesondere eines zumindest zweiachsigen Mikroscannersystems, bewirkt wird. Dabei wird zumindest eine erste dieser Schwingungen bezüglich einer ersten Schwingungsachse in ihrer Amplitude in Abhängigkeit von der momentanen Amplitude einer Schwingung bezüglich zumindest einer anderen Schwingungsachse moduliert, sodass zumindest die erste Schwingung keine lineare Oszillation darstellt und somit nicht dem Hook'schen Gesetz mit amplitudenunabhängiger Federkonstante folgt.

Unter dem Begriff "Achse" bzw. gleichbedeutend "Schwingungsachse" (und Abwandlungen davon), wie hierin verwendet, ist eine Drehachse (Rotationsachse) einer, insbesondere oszillierenden, rotatorischen Bewegung zu verstehen. Sie ist somit eine Gerade, die eine Rotation oder Drehung definiert oder beschreibt.

Unter dem Begriff "Antriebseinrichtung" (und Abwandlungen davon), wie hierin verwendet, ist insbesondere eine Vorrichtung zu verstehen, die einen oder mehrere Aktuatoren zum Antrieb der Ablenkeinheit, d.h. der simultanen rotatorischen Oszillationen des Ablenkelements eines mehrachsigen Mikroscanners relativ zu einer Tragestruktur, an der das Ablenkelement schwingfähig aufgehängt ist, und bezüglich zumindest der ersten und der zweiten, sowie gegebenenfalls auch einer dritten Schwingungsachse, aufweist. Im Falle eines Mikroscannersystems mit mehreren Mikroscannern kann unter einer Antriebseinrichtung insbesondere auch eine Vorrichtung zu verstehen sein, die einen oder mehrere Aktuatoren zum Antrieb der jeweiligen Ablenkeinheiten dieser Mikroscanner aufweist.

Unter dem Begriff "Phasendurchlauf" (und Abwandlungen davon), wie hierin verwendet, ist insbesondere eine Zeitspanne zu verstehen, die als Zeitraum zwischen einem Auftreten und einem erstmaligen nachfolgenden Auftreten eines bestimmten gleichen, aus den Phasen für die erste und die zweite Oszillation gebildeten, Phasenlagenpaars bestimmt ist. Speziell im Falle geschlossener Trajektorien des durch das Mikroscannersystem abgelenkten elektromagnetischen Strahls entspricht ein Phasendurchlauf genau einem vollständigen Phasendurchlauf durch die zugehörige Lissajous-Figur.

Unter dem Begriff "Abhängigkeitsverhältnis" zwischen zwei Größen (und Abwandlungen davon), wie hierin verwendet, ist zu verstehen, dass zumindest eine der beiden Größen von der anderen Größe abhängt. Die Abhängigkeit kann sich insbesondere im Sinne einer mathematischen Funktion oder allgemeiner im Sinne einer Relation oder Korrelation ausdrücken. Entscheidend ist vorliegend, dass aus dem gemessenen Wert der zumindest einen Größe auf eine davon in Abhängigkeit stehende Resonanzfrequenz geschlossen werden kann. Die Abhängigkeit kann einseitig oder wechselseitig sein.

Die diskrete Menge von Frequenzpaaren kann insbesondere explizit mittels ihrer Elemente (Frequenzpaare oder dazu korrespondierende Paare von Frequenzabweichungen bezüglich eines Referenzfrequenzpaares) oder implizit durch eine Generierungsvorschrift definiert sein, mittels derer sich die Elemente der Menge generieren lassen.

Unter dem Begriff "Auswahlvorschrift" (und Abwandlungen davon), wie hierin verwendet, ist insbesondere eine feste Regel zu verstehen, gemäß der ein Element der diskreten Menge von Frequenzpaaren, also ein bestimmtes Frequenzpaar, in Abhängigkeit von dem Wert der sensorisch erfassten physikalischen Größe eindeutig ausgewählt werden kann. Die Auswahlvorschrift kann insbesondere im Sinne einer tabellenartigen Relation implementiert sein, bei der jedem Element einer Menge von möglichen Werten oder Wertebereichen für die physikalische Größe jeweils ein bestimmtes Frequenzpaar aus der diskreten Menge von Frequenzpaaren zugeordnet wird. Die Auswahlvorschrift kann jedoch insbesondere auch im Sinne einer Rechenvorschrift festgelegt sein, mittels der mit einem jeweiligen Wert für die physikalische Größe bzw. gegebenenfalls für jede einer verwendeten Mehrzahl physikalischer Größen als Eingangsgröße(n) eine Ausganggröße berechnet werden kann, die eindeutig einem bestimmten Frequenzpaar der diskreten Menge von Frequenzpaaren zugeordnet ist, beispielsweise als Index zu der diskreten Menge oder bereits als das ausgewählte Frequenzpaar selbst.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hierin verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hierin verwendet wird, ist im Sinne von "zwei oder mehr" zu verstehen.

Unter "konfiguriert" oder "Konfiguration", "eingerichtet" bzw. Abwandlungen dieser Begriffe ist im Sinne der Lösung zu verstehen, dass die entsprechende Vorrichtung bereits dazu hergerichtet oder einstellbar - d.h. konfigurierbar - ist, eine bestimmte Funktion zu erfüllen. Die Konfiguration bzw. Einrichtung kann dabei beispielsweise über eine entsprechende Einstellung von Parametern eines Prozessablaufs oder von hardware- oder softwareimplementierten Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das Konfigurieren mittels einer Auswahl einer dieser Konfigurationen bzw. Betriebsmodi erfolgen kann.

Während bei herkömmlichen Verfahren zum Betrieb von Lissajous-Mikroscannersystemen meist je Schwingungsachse einen Phasenregelkreis eingesetzt wird, um die Oszillation zur zugehörigen Schwingungsachse in Resonanz zu halten, erfolgt bei dem Verfahren nach dem ersten Aspekt der Betrieb so, dass zumindest bezüglich einer Schwingungsachse eine Antriebsfrequenz verwendet wird, die sich von der zugehörigen Resonanzfrequenz zur selben Schwingungsachse um eine Frequenzabweichung unterscheidet. Durch geeignete Definition der diskreten Menge von Frequenzpaaren und der Auswahlvorschrift dazu, lassen sich so bestimmte, vom reinen Resonanzbetrieb, insbesondere doppeltresonanten Betrieb, abweichende Eigenschaften der resultierenden Trajektorie einerseits gezielt einstellen und anderseits mittels der Regelung auch bei sich zeitlich verändernden Resonanzfrequenzen aufrechterhalten. Derartige zeitliche variable Resonanzfrequenzen zu den Schwingungsachsen können sich beispielsweise aufgrund von Temperaturänderungen und dadurch bedingten Änderungen des Trägheitsmoments des Ablenkelements oder von Eigenschaften seiner Aufhängung ergeben.

So kann insbesondere erreicht werden, dass eine Lissajous-Trajektorie, die in einem bestimmten Zeitintervall Bildbereiche im auszuleuchtenden Beobachtungsfeld auslässt, sich im unmittelbar nachfolgenden nächsten Zeitintervall gezielt in genau diese zuvor ausgelassenen Bildbereiche schiebt. Das kann hier insbesondere dadurch erreicht werden, dass im Sinne einer durch die diskrete Menge festgelegten Positivliste prinzipiell nur solche Trajektorien zugelassen sind, für die genau das im Voraus bekannt ist - insbesondere für relevante Betrachtungszeiträume, die sich üblicherweise an der menschlichen Wahrnehmung und der Bildwiederholrate von üblichen Video-Formaten orientieren. So lässt sich die erreichbare Bildqualität verbessern, da eine homogenere Trajektoriendichte und somit eine homogenere Ausleuchtung eines durch die Lissajous-Figur insgesamt ausgeleuchteten Beobachtungsfelds erreicht werden kann.

Auf die vorgenannte Art und Weise lassen sich, ohne dass dies jedoch als Beschränkung aufzufassen wäre, besonders geeignete Frequenzpaare bestimmen, die sich insbesondere dadurch auszeichnen, dass dadurch ein Fortschreiten der Trajektorie von Zeitintervall zu Zeitintervall erreicht werden kann, bei dem innerhalb eines Zeitintervalls vor allem auch solche Bildbereiche im Beobachtungsfeld ausgeleuchtet werden, die im unmittelbar vorausgehenden Zeitintervall noch nicht von der Trajektorie erreicht wurden.

Je höher dabei der Wert von |*n*_{Δ}| gewählt wird, desto geringer fällt die Trajektorienverschiebung von Zeitintervall zu Zeitintervall aus. Im Fall |*n*_{Δ}| = 2 lassen sich insbesondere Trajektorien erzielen, die sich im Wesentlichen mittig in die im unmittelbar vorausgehenden Zeitintervall noch nicht ausgeleuchteten Bildbereiche legen.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Lösung kombiniert werden können.

Bei einigen Ausführungsformen wird gemäß der Auswahlvorschrift für das jeweilige Zeitintervall dasjenige Frequenzpaar aus der Menge ausgewählt, das bezüglich zumindest einer seiner beiden Frequenzen eine von Null verschiedene und innerhalb der Menge minimale Frequenzabweichung von der Resonanzfrequenz zur selben Schwingungsachse aufweist, die gemäß dem Abhängigkeitsverhältnis zu dem erfassten Wert der zumindest einen Größe korrespondiert. Eine solche Auswahl ist insbesondere dahingehend vorteilhaft, dass auf diese Weise eine Lissajous-Figur für das neue Zeitintervall resultiert, deren Form derjenigen der Lissajous-Figur im vorausgehenden Zeitintervall stark ähnelt, sodass sie sich besonders gut in die von dieser vorausgehenden Lissajous-Figur freigelassenen Bildbereiche legen kann. So kann über die beiden Zeitintervalle hinweg eine deutliche Verbesserung bezüglich des in diesen Gesamtzeitraum insgesamt erreichbaren Ausleuchtungsgrads erzielt werden.

Bei einigen Ausführungsformen entspricht die jeweilige Dauer jedes Zeitintervalls wenigstens 90%, insbesondere wenigstens 50%, bevorzugt wenigstens 80%, weiter bevorzugt wenigstens 95%, der Dauer eines Phasendurchlaufs einer durch reflektierendes Ablenken eines während der simultanen Oszillationen auf das Mikroscannersystem einfallenden elektromagnetischen Strahls in ein Beobachtungsfeld bewirkten Lissajous-Trajektorie gemäß dem dem jeweiligen Zeitintervall zugeordneten Frequenzpaar. Auf diese Weise wird ebenfalls ein hoher erreichbaren Ausleuchtungsgrad und somit einen hohe Abbildungsqualität gefördert. Bei einigen Ausführungsformen weist das Verfahren des Weiteren ein Bestimmen zumindest eines Frequenzpaares {*f₁; f₂*} der Menge auf in Abhängigkeit von:
- der Resonanzfrequenz *f*_{*r,*1} des Mikroscannersystems für die erste Schwingungsachse;
- der Resonanzfrequenz *f*_{*r,*2} des Mikroscannersystems für die zweite Schwingungsachse; und
- zumindest einem vorbestimmten Linienabstandswert oder einer dafür festgelegten Obergrenze, der bzw. die einen während eines vollständigen Phasendurchlaufs auftretenden maximalen Linienabstand benachbarter Linien der Lissajous-Trajektorie kennzeichnen.

Insbesondere kann dabei jeweils eine zugeordnete Obergrenze für einen Linienabstand entlang einer zur ersten Schwingungsachse parallelen Richtung und/oder für einen Linienabstand entlang einer zur zweiten Schwingungsachse parallelen Richtung festgelegt sein oder werden. Der maximale Linienabstand tritt bei einer Lissajous-Projektion typischerweise in bzw. in der Nähe der Bildmitte der Projektion auf.

Diese Ausführungsformen zeichnen sich insbesondere dadurch aus, dass sie sowohl in einem jeweiligen betrachteten Beobachtungszeitraum (Bildframe) eine gute Homogenität der Ausleuchtung erreichen als auch dabei zumindest die meisten, insbesondere sämtliche, Pixel bzw. Bildbereiche innerhalb sehr kurzer Zeit erreichen, so dass sich bei der zugehörigen Lissajous-Projektion eine sehr hohe Bildqualität erreichen lässt.

Insbesondere kann das Bestimmen des zumindest einen Frequenzpaares {f₁; f₂} (verschiedene Frequenzpaare könnten auf verschiedene Weise bestimmt werden) ausgehend von einer Phasendurchlauffrequenz *fᵣₑₛ* erfolgen, die zu einer geschlossenen Lissajous-Trajektorie für ein Paar { *f*_{0,1} , *f*_{0,2} } von möglichen Resonanzfrequenzen des Mikroscannersystems für die beiden Oszillationen korrespondiert. Das Bestimmen des zumindest einen Frequenzpaares {f₁; f₂} weist dabei auf:
(i) Bestimmen, einer Untergrenze für einen der ersten Schwingungsachse zugeordneten ersten Faktor n₁ und/oder einen der zweiten Schwingungsachse zugeordneten zweiten Faktor n₂, jeweils in Abhängigkeit von einem der jeweiligen Schwingungsachse zugeordneten Linienabstandswert oder der dafür festgelegten Obergrenze, wobei n₁, n₂ ≥ 1 jeweils ganze Zahlen sind; und
(ii) Bestimmen des zumindest einen Frequenzpaares {f₁; f₂} auf solche Weise, dass für dieses Frequenzpaar bzw. jedes dieser Frequenzpaare die folgenden Bedingungen gelten: *f*₁ ≤ *f*_{0,1}/n₁; *f*₂ ≤ *f*_{0,2} /n₂ ; und n₁, n₂ sind teilerfremd.

Bei einigen Ausführungsformen weist das Mikroscannersystem ein Ablenkelement auf, das derart schwingungsfähig aufgehängt ist, dass es die erste rotatorische Oszillation um die erste Schwingungsachse und simultan dazu die zweite rotatorische Oszillation um die zweite Schwingungsachse ausführen kann. Während der beiden simultanen Oszillationen wird ein elektromagnetischer Strahl auf das Ablenkelement gerichtet, um durch dessen Reflektion am Ablenkelement eine Lissajous-Projektion des Strahls in ein Beobachtungsfeld zu bewirken. Das Mikroscannersystem kann demgemäß insbesondere so ausgebildet sein, dass es nur einen einzigen, mehrachsigen Mikroscanner aufweist.

Bei einigen anderen Ausführungsformen weist das Mikroscannersystem ein erstes Ablenkelement und ein zweites Ablenkelement auf, wobei das erste Ablenkelement derart schwingungsfähig aufgehängt ist, dass es die erste rotatorische Oszillation um die erste Schwingungsachse ausführen kann, und das zweite Ablenkelement derart schwingungsfähig aufgehängt ist, dass es simultan zur ersten Oszillation eine zweite rotatorische Oszillation um die zweite Schwingungsachse ausführen kann. Dabei wird während der beiden simultanen Oszillationen ein elektromagnetischer Strahl auf das erste Ablenkelement gerichtet, um durch dessen sequenzielle Reflektion zunächst am ersten Ablenkelement und nachfolgend am zweiten Ablenkelement eine Lissajous-Projektion des Strahls in ein Beobachtungsfeld zu bewirken. Ein derartiges Mikroscannersystem kann somit insbesondere zwei einachsige Mikroscanner aufweisen, die auf die vorstehend genannte Weise zum sequenziellen Ablenken des elektromagnetischen Strahls eingesetzt werden können, insbesondere um eine Lissajous-Projektion zu bewirken.

Bei einigen Ausführungsformen weist das Verfahren des Weiteren ein Modulieren, insbesondere bezüglich einer Intensität oder Wellenlänge, des elektromagnetischen Strahls mittels eines Bildsignals in Abhängigkeit von der momentanen Ablenkung des Strahls auf solche Weise auf, dass die Lissajous-Projektion mit einer bestimmten Bildauflösung von N matrixförmigen angeordneten Pixeln ein zweidimensionales digitales Bild oder eine Folge solcher Bilder in das Beobachtungsfeld abbildet. Dabei erfolgt gemäß der Auswahlvorschrift für zumindest eines, bevorzugt jedes, der Zeitintervalle die Auswahl des ihm jeweils zugeordneten Frequenzpaares aus der Menge so, dass innerhalb von höchstens fünf, bevorzugt höchstens drei, unmittelbar aufeinanderfolgenden Phasendurchläufen jedes der N Pixel der Bildauflösung auf die Beobachtungsfläche abgebildet wird (Ausleuchtungsbedingung).

Die Auswahlvorschrift und/oder die diskrete Menge ist bzw. sind hier somit auf solche Weise definiert, dass mittels der Auswahlvorschrift für das bzw. die Zeitintervalle jeweils ein solches Frequenzpaar ausgewählt wird, dass die o.g. Ausleuchtungsbedingung erfüllt wird. Die Festlegung der Auswahlvorschrift bzw. der damit in Abhängigkeit von der erfassten physikalischen Größe auszuwählenden Frequenzpaare kann insbesondere so vorab erfolgen, etwa im Rahmen einer Testreihe bzw. Charakterisierung des Mikroscannersystems, dass a priori bekannt ist, dass diese Frequenzpaare die o.g. Ausleuchtungsbedingung beim Auftreten des korrespondierenden Werts bzw. der korrespondierenden Werte der einen oder mehreren sensorisch erfassten physikalischen Größen erfüllen. Bei diesen Ausführungsformen kann das Einhalten der genannten Ausleuchtungsbedingung somit a priori sichergestellt werden.

Insbesondere kann während der jeweiligen Dauer jedes Zeitintervalls die Dauer eines Phasendurchlaufs einer Lissajous-Trajektorie gemäß dem dem jeweiligen Zeitintervall zugeordneten Frequenzpaar kürzer (gewählt) sein bzw. werden als eine geringste während des jeweiligen Zeitintervalls bei einer Lissajous-Projektion mittels des Mikroscannersystems auftretende Projektionsdauer je Bild. So lässt sich eine hohe Bildqualität des projizierten Bilds bzw. gegebenenfalls einer projizierten Bildfolge erreichen, da das bzw. jedes Bild mittels zumindest einem vollständigen Phasendurchlauf und somit unter Erreichung eines zumindest großen Anteils aller Pixel, insbesondere aller N Pixel, projiziert wird.

Bei einigen der Ausführungsformen zur Bilderzeugung erfolgt gemäß der Auswahlvorschrift für zumindest eines, bevorzugt jedes, der Zeitintervalle, die Auswahl des ihm jeweils zugeordneten Frequenzpaares aus der Menge so, dass das ausgewählte Frequenzpaar zu einer sich bei der Lissajous-Projektion ergebenden Lissajous-Trajektorie korrespondiert, die während eines vollständigen Phasendurchlaufs wenigstens 90%, bevorzugt wenigstens 95% der N Pixel durchläuft. Somit lässt sich insbesondere erreichen, dass eine bereits weitgehend homogene Ausleuchtung bereits mit einem einzigen Phasendurchlauf bzw. Phasendurchlauf erreicht wird. Ein oder mehrere Frequenzpaare, die diese Bedingung erfüllen, lassen sich wiederum a priori für das konkrete Mikroscannersystem bestimmen, insbesondere auf Basis von dessen bekannten Resonanzfrequenzen und deren Abhängigkeit von der zumindest einen physikalischen Größe.

Bei einigen Ausführungsformen gilt für die physikalische Größe, dass sie einen der folgenden Zustände des Mikroscannersystems (insbesondere eines Abschnitts oder Bestandteils davon) oder eine Kombination von zumindest zwei dieser Zustände oder Zustandsveränderungen charakterisiert oder davon abhängt: (i) eine Verschiebung einer gemessenen Resonanzfrequenz zumindest einer der Oszillationen; (ii) eine Temperatur; (iii) eine mechanische Spannung oder Dehnung; (iv) eine Schwingungsamplitude des bzw. eines Ablenkelements; (v) eine bei zumindest einer der Oszillationen auftretende Phaseninstabilität; (vi) ein Überschreiten der jeweiligen Stellgröße eines Phasenregelkreises für die Phase zumindest einer der Oszillationen; (vii) eine Phasendifferenz zwischen einem Antriebssignal zur Ansteuerung der Antriebseinrichtung und einem Messsignal, das eine gemessene Auslenkung des Ablenkelements repräsentiert; (viii) eine Veränderung der eingestrahlten elektromagnetischen Strahlungsleistung, die das Ablenkelement durch Absorption aufnimmt; (ix) ein Schwingungszustands eines Referenzoszillators im Mikroscannersystem, oder dessen Änderung, wobei der Schwingungszustand des Referenzoszillators bzw. dessen Änderung mit einem Schwingungszustand des bzw. zumindest eines Ablenkelements bzw. dessen Änderung korreliert, insbesondere in einem bestimmten Abhängigkeitsverhältnis steht. So kann, etwa nach einer vorausgehenden Kalibrierung, von dem erfassten Schwingungszustand des Referenzoszillators oder dessen Änderung auf den Schwingungszustand des bzw. zumindest eines Ablenkelements bzw. dessen Änderung geschlossen werden. Als Schwingungszustand kommen insbesondere eine Amplitude, eine Frequenz und/oder eine Phase der jeweiligen Oszillation oder eine Kombination aus zwei oder mehr dieser Größen in Frage.

All diesen Zuständen bzw. Zustandsänderungen ist gemein, dass sie einerseits sensorisch gut erfassbar sind und andererseits in einem Abhängigkeitsverhältnis mit den aktuellen Resonanzfrequenzen des Mikroscannersystems stehen und somit als Eingangsgröße für die Regelung der Antriebsfrequenz bzw. Antriebsfrequenzen geeignet sind.

Bei einigen Ausführungsformen wird der Wert der zumindest einen physikalischen Größe in Abhängigkeit von der die Auswahl des jeweiligen zugeordneten Frequenzpaars für ein jeweiliges Zeitintervall erfolgt, während des diesem Zeitintervall unmittelbar vorausgehenden Zeitintervalls erfasst. Damit wird der Zeitraum zwischen der Auswahl des Frequenzpaares und seiner Anwendung zum Antrieb des Mikroscannersystems möglichst gering gehalten, sodass das ausgewählte Frequenzpaar besonders gut zu den aktuellen Resonanzfrequenzen des Mikroscannersystems passt, insbesondere im Hinblick auf eine bezüglich einer guten Ausleuchtung wirksame, insbesondere optimale, Trajektoriendichteregelung zur Erreichung einer trotz variabler Resonanzfrequenzentwicklung möglichst gleichbleibenden Trajektoriendichte.

Bei einigen Ausführungsformen erfolgt der Wechsel zwischen jeweils unmittelbar aufeinanderfolgenden Zeitintervallen im Rahmen der Ansteuerung jeweils zu einem Zeitpunkt, an dem die Trajektorie der Lissajous-Projektion einen Abstand zum Zentrum des von der Trajektorie innerhalb ihres vollständigen Phasendurchlaufs ausgeleuchteten Beobachtungsfelds aufweist, der zumindest 80%, bevorzugt zumindest 90%, des maximal auftretenden Abstands eines Punkts auf der Trajektorie von dem Zentrum entspricht. Dies hat den Vorteil, dass der Wechsel im Außenbereich der Lissajous-Figur erfolgt, wo er vom Betrachter typischerweise gar nicht, zumindest weniger leicht oder als weniger störend wahrgenommen wird als näher am Zentrum des ausgeleuchteten Beobachtungsfelds.

Bei einigen dieser Ausführungsformen erfolgt der Wechsel speziell zwischen aufeinanderfolgenden Zeitintervallen im Rahmen der Ansteuerung jeweils zu einem Zeitpunkt, an dem die Trajektorie der Lissajous-Projektion einen äußeren Umkehrpunkt der Trajektorie durchläuft. Hier ist die Erkennbarkeit eines solchen Wechsels für den Betrachter typischerweise besonders gering, so dass die erreichbare Qualität der Abbildung trotz der auftretenden Frequenzpaarsprünge und den daraus resultierenden Trajektorienveränderungen besonders hoch ist.

Bei einigen Ausführungsformen werden die Frequenzpaare der diskreten Menge vorab ("offline") in einer, vorzugsweise nichtflüchtigen, Speichereinrichtung vorgehalten und daraus für zumindest eines der Zeitintervalle in Abhängigkeit von dem sensorisch erfassten Wert der zumindest einen physikalischen Größe gemäß der Auswahlvorschrift für jedes Zeitintervall sein zugeordnetes Frequenzpaar ausgewählt. Somit können die Frequenzpaare der diskreten Menge vorab, beispielsweise im Rahmen einer Vermessung bzw. Charakterisierung des verfahrensgemäß zu betreibenden konkreten Mikroscannersystems bestimmt und für den späteren Einsatz im operativen Betrieb des Mikroscannersystems in der Speichereinrichtung auslesbar gespeichert und somit vorgehalten werden. Dies ermöglicht insbesondere Implementierungen mit sehr hoher Performanz, da die Frequenzpaare nicht erst während des operativen Betriebs berechnet werden müssen. Auch lassen sich geeignete Frequenzpaare als Elemente der diskreten Menge besonders genau bestimmen, da sich zur Vermessung bzw. Charakterisierung des Mikroscannersystems bei verschiedenen Zuständen, beispielsweise Temperaturen oder mechanischen Belastungen, genauere Messverfahren und Gerätschaften einsetzen lassen, etwa unter Fertigungs- oder Laborbedingungen, als im späteren operativen Betrieb, wo aufwändige Messgerätschaften regelmäßig nicht zur Verfügung stehen und typischerweise nur mikroscannersystemeigene Messanordnung mit oft geringerer Genauigkeit genutzt werden können.

Bei einigen Ausführungsformen wird im Rahmen der Ansteuerung für zumindest eines der Zeitintervalle das zugeordnete Frequenzpaar dynamisch ("online") während des Verfahrensablaufs mittels einer durch die Auswahlvorschrift festgelegten Rechenvorschrift, welche die diskrete Menge definiert, in Abhängigkeit von dem sensorisch erfassten Wert der zumindest einen physikalischen Größe bestimmt. Hier kann das o.g. Vorhalten von vorab bestimmten Frequenzpaaren entfallen, so dass insbesondere auch die dafür erforderliche Speicherkapazität und die Vorab-Bestimmung der Frequenzpaare vor Aufnahme des operativen Betriebs, insbesondere für Displayanwendungen, entfallen können.

Bei einigen Ausführungsformen wird zusätzlich zu dem Auswählen eines jeweiligen zugeordneten Frequenzpaares für jedes Zeitintervall auch eine diesem Zeitintervall zugeordnete Soll-Amplitudenverstärkung bezüglich zumindest einer der beiden Schwingungsachsen ausgewählt. Zudem erfolgt während des jeweiligen Zeitintervalls die Ansteuerung der Antriebseinrichtung einschließlich einer durch die zugeordnete Soll-Amplitudenverstärkung konfigurierten jeweiligen Amplitudenverstärkung bezüglich dieser zumindest einen Schwingungsachse. Auf diese Weise lassen sich Verkleinerungen der Ausmaße des ausgeleuchteten Beobachtungsfelds (insbesondere senkrecht zur optischen Achse der Abbildung), die sich in Abhängigkeit von den durch die Frequenzpaarauswahl bedingten Frequenzabweichungen bei einem oder mehreren der Frequenzpaare ergeben könnten, vollständig oder zumindest teilweise durch eine entsprechende Amplitudenanpassung kompensieren.

Bei einigen Ausführungsformen ist das Mikroscannersystem so konfigurierbar, dass seine jeweilige Resonanzfrequenz bezüglich zumindest einer der Schwingungsachsen mittels entsprechender Anpassung zumindest eines Konfigurationsparameters des Mikroscannersystems verstimmt werden kann. Im Rahmen des Verfahrens erfolgt dann für zumindest eines der Zeitintervalle zusätzlich zu dem Auswählen eines jeweiligen zugeordneten Frequenzpaares auch eine Resonanzfrequenzverstimmung des Mikroscannersystems bezüglich der zumindest einen Schwingungsachse mittels Einstellens des zumindest einen Konfigurationsparameters. Diese Verstimmung der Resonanzfrequenz zur jeweils betroffenen Schwingungsachse kann insbesondere anstelle oder kumulativ mit der vorgenannten Amplitudenverstärkung zum Einsatz kommen. Insbesondere kann sich der Konfigurationsparameter auf konfigurierbare Eigenschaften des Trägheitsmoments eines relevanten Ablenkelements des Mikroscannersystems oder von der Aufhängung des Ablenkelements beziehen. Beispielsweise kann die Konfiguration, zumindest anteilig, dadurch erfolgen, dass das Mikroscannersystem auf ein bestimmtes Temperaturniveau gebracht wird, das zu einer bestimmten Resonanzfrequenz des Mikroscannersystems korrespondiert. Auch ist es denkbar stattdessen oder kumulativ eine Konfiguration der Aufhängung des bzw. der Ablenkelemente vorzunehmen, mittels derer eine effektive Federsteifigkeit der Aufhängung verändert wird.

Ein zweiter Aspekt der Lösung betrifft eine Steuerungsvorrichtung zur Trajektorienregelung eines Mikroscannersystems, wobei die Steuerungsvorrichtung zum Ansteuern einer Antriebseinrichtung für ein Mikroscannersystem gemäß dem Verfahren nach dem ersten Aspekt der Lösung konfiguriert ist.

Gemäß einiger Ausführungsformen kann die Steuerungsvorrichtung insbesondere jeweils für zumindest eine der beiden Schwingungsachsen aufweisen: (i) einen Phasenregelkreis zur Stabilisierung, insbesondere Vermeidung, einer Phasendifferenz zwischen einer Phase der zu der Schwingungsachse korrespondierenden ersten bzw. zweiten Oszillation und einem zugehörigen von dem Phasenregelkreis ausgegebenen Ansteuersignal für die Antriebseinrichtung bezüglich der Schwingungsachse; und (ii) eine, insbesondere computerprogrammgesteuerte, Frequenzanpassungseinrichtung für den Phasenregelkreis, die konfiguriert ist, eine Führungsgröße des Phasenregelkreises in Abhängigkeit von einer für dieses Zeitintervall gemäß dem Verfahren nach dem ersten Aspekt bestimmten Soll-Frequenz bezüglich der Schwingungsachse anzupassen. Auf diese Weise lässt sich eine besonders effiziente Kombination, insbesondere Integration, der verfahrensgemäßen Frequenzanpassung mit bzw. in die Phasenregelung erreichen.

Ein dritter Aspekt der Lösung betrifft ein Computerprogramm mit Befehlen, die bewirken, dass die vorgenannte Steuerungsvorrichtung, insbesondere deren Frequenzanpassungseinrichtung, das Verfahren nach dem ersten Aspekt der Lösung ausführt.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmmodulen aufweisen.

Die Steuerungsvorrichtung nach dem zweiten Aspekt kann entsprechend einen Programmspeicher aufweisen, in dem das Computerprogramm (nach dem dritten Aspekt) abgelegt ist. Alternativ kann die Steuerungsvorrichtung auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere, um mit diesem Daten auszutauschen, die während des Ablaufs des Verfahrens bzw. Computerprogramms Verwendung finden oder Ausgaben des Computerprogramms darstellen.

Ein vierter Aspekt der Lösung betrifft ein Strahlablenksystem, aufweisend: (i) ein mehrachsiges Mikroscannersystem mit zumindest einem Ablenkelement, das eine erste rotatorische Oszillation um eine erste Schwingungsachse ausführen kann, und mit zumindest einem Ablenkelement, das simultan zur ersten Oszillation eine zweite rotatorische Oszillation um eine zur ersten Schwingungsachse orthogonale zweite Schwingungsachse ausführen kann, um durch reflektierendes Ablenken eines während der simultanen Oszillationen auf das Mikroscannersystem einfallenden elektromagnetischen Strahls eine Lissajous-Projektion in ein Beobachtungsfeld zu bewirken; (ii) eine Antriebseinrichtung zum Antrieb zumindest einer der Oszillationen des Mikroscannersystems; und (iii) eine Steuerungsvorrichtung nach dem zweiten Aspekt zum Ansteuern der Antriebseinrichtung gemäß dem Verfahren nach dem ersten Aspekt.

Bei einigen Ausführungsformen des Strahlablenksystems beträgt der Gütefaktor (oft auch als "Q-Faktor" bezeichnet) des Mikroscannersystems bezüglich zumindest einer der beiden Oszillationen wenigstens 1000. Dies lässt sich insbesondere unter Verwendung einer hermetischen Verkapselung des zugehörigen Mikroscanners bzw. der zugehörigen Mikroscanner des Mikroscannersystems erreichen, bei dem bzw. denen jeweils die schwingungsfähigen Bestandteile, insbesondere das jeweilige Ablenkelement mit seiner Aufhängung, in einem durch die Verkapselung definierten Innenraum angeordnet sind, in dem ein unterhalb des Atmosphärendrucks liegender Gasdruck, insbesondere ein Vakuum herrscht. Dort tritt nur eine entsprechend geringe Dämpfung der Oszillationen des Ablenkelements auf und es lassen sich insbesondere auf stabile Weise große Auslenkungswinkel des Ablenkelements bei seinen Oszillationen und somit ein stabiles großes ausgeleuchtetes Beobachtungsfeld erreichen.

Die in Bezug auf den ersten Aspekt der Lösung erläuterten Merkmale und Vorteile gelten entsprechend auch für die weiteren Aspekte der Lösung.

Weitere Vorteile, Merkmale und Anwendungsmöglichkeiten der vorliegenden Lösung ergeben sich aus der nachfolgenden detaillierten Beschreibung im Zusammenhang mit den Figuren.

Dabei zeigt:
**Fig. 1A-C** verschiedene beispielhafte Trajektorien und Trajektorienausschnitte einer Lissajous-Projektion auf eine Projektionsfläche in einem auszuleuchtenden Beobachtungsfeld bei einem zweiachsigen Mikroscanner aus dem Stand der Technik;
**Fig. 2** ein Flussdiagramm zur Veranschaulichung einer bevorzugten Ausführungsform des lösungsgemäßen Verfahrens bei Verwendung eines Mikroscannersystems mit einem zweiachsigen Mikroscanner;
**Fig. 3** verschiedene beispielhafte tabellarische Darstellungen je einer diskreten Menge von Frequenz- und Amplitudenpaaren;
**Fig. 4** beispielhaft (i) eine geschlossene Ausgangstrajektorie, (ii) eine Reihe von Trajektorienabschnitten zu aufeinanderfolgenden Phasendurchläufen einer geregelten Trajektorie, und (iii) die durch Aneinanderreihung dieser Trajektorienabschnitten entstehende geregelte Trajektorie, jeweils bei einer Lissajous-Projektion mittels eines beispielhaften lösungsgemäßen Mikroscannersystems mit einem zweiachsigen Mikroscanner auf eine Projektionsfläche in einem auszuleuchtenden Beobachtungsfeld;
**Fig. 5** drei beispielhafte zeitlich aufeinanderfolgende Teilbilder einer geregelten Trajektorie mit nur sehr geringer Frequenzabweichung bei einer Lissajous-Projektion mittels eines beispielhaften lösungsgemäßen Mikroscannersystems mit einem zweiachsigen Mikroscanner auf eine Projektionsfläche in einem auszuleuchtenden Beobachtungsfeld;
**Fig. 6** drei beispielhafte zeitlich aufeinanderfolgende Teilbilder einer geregelten Trajektorie mit einer gegenüber derjenigen aus Fig. 5 optimierten Frequenzabweichung bei einer Lissajous-Projektion mittels eines beispielhaften lösungsgemäßen Mikroscannersystems mit einem zweiachsigen Mikroscanner auf eine Projektionsfläche in einem auszuleuchtenden Beobachtungsfeld;
**Fig. 7** für zwei verschiedene Frequenzabweichungen je eine beispielhafte Reihe von Trajektorienabschnitten zu aufeinanderfolgenden Phasendurchläufen einer geregelten Trajektorie und die durch Aneinanderreihung dieser Trajektorienabschnitten entstehende geregelte Trajektorie, jeweils bei einer Lissajous-Projektion mittels eines beispielhaften lösungsgemäßen Mikroscannersystems mit einem zweiachsigen Mikroscanner auf eine Projektionsfläche in einem auszuleuchtenden Beobachtungsfeld;
**Fig. 8** schematisch ein beispielhaftes Strahlablenksystem gemäß beispielhaften Ausführungsformen der Lösung;
**Fig. 9** ein beispielhaftes Blockschaltbild einer Schaltung zur Erzeugung von Steuerungssignalen für eine Antriebseinrichtung eines Lissajous-Mikroscanners ohne lösungsgemäße Trajektorienregelung; und
**Fig. 10** ein beispielhaftes auf Fig. 9 aufbauendes Blockschaltbild einer Schaltung zur Erzeugung von Steuerungssignalen für eine Antriebseinrichtung eines beispielhaften Lissajous-Mikroscannersystems mit einer lösungsgemäßen Trajektorienregelung.

Im Folgenden wird, soweit nicht anders angegeben, beispielhaft von einem Mikroscannersystem mit einem zweiachsigen Mikroscanner ausgegangen, ohne dass dies jedoch insgesamt als Einschränkung der vorliegenden Erfindung auf solche spezielle Mikroscannersysteme zu verstehen ist.

Laser-Projektions-Systeme auf der Basis von Lissajous-Mikroscannern funktionieren in der Regel so, dass ein Intensitäts- und/oder farbmodulierter Laser Licht auf ein Ablenkelement eines mehrachsigen Mikroscannersystems, insbesondere im Falle eines mehrachsigen Mikroscanners auf ein zweiachsig ausgelenkbar aufgehängtes Ablenkelement (Spiegel) desselben, wirft. Das Ablenkelement wird bzw. im Falle mehrerer Mikroscanner werden die Ablenkelemente wiederum über eine geeignete Antriebseinrichtung angetrieben, die insbesondere einen oder mehrere Piezoaktuatoren aufweisen kann. So wird bewirkt, dass das Ablenkelement bzw. die Ablenkelemente auf beiden Achsen derart schwingt bzw. schwingen, dass die von ihm bzw. ihnen projizierte Figur für einen menschlichen Betrachter wie eine, insbesondere rechteckig, ausgeleuchtete Fläche wirkt.

Die Trajektorie, der der Laserpunkt folgt, entspricht aber tatsächlich einer Lissajous-Figur, die durch das Verhältnis der Schwingungsfrequenzen der beiden Achsen lediglich so komplex wird, dass ein Betrachter die einzelnen Linien im Idealfall nicht mehr unterscheiden kann. Die Schwingungsfrequenzen entsprechen bei bekannten Lösungen mit einem einzigen zweiachsigen Mikroscanner als Mikroscannersystem typischerweise den zugehörigen Resonanzfrequenzen, d.h. Eigenfrequenzen, des aufgehängten Spiegels (schwingungsfähiges System) bezüglich der jeweiligen Schwingungsachse, da bei einem solchen, als "doppeltresonant" bezeichneten Betrieb die größten Auslenkungen und somit die größte Ausleuchtung bzw. Bildfläche erreicht werden kann.

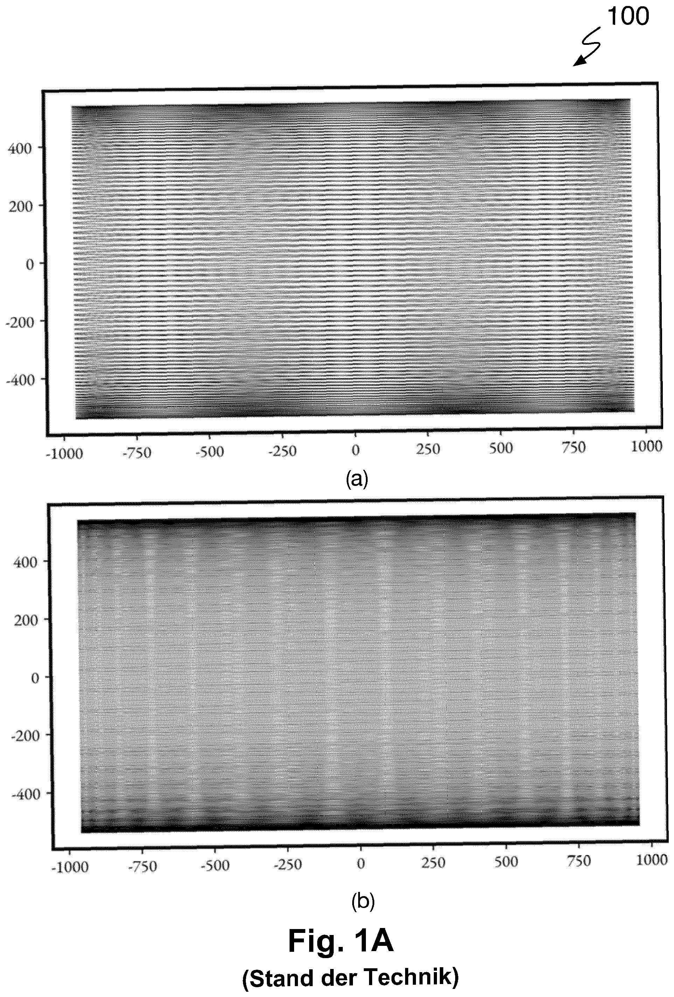

Orientieren sich die Antriebsfrequenzen aber durch Regelung der jeweiligen Phase der Schwingungen mit je einem Phasenregelkreis an diesen Resonanzfrequenzen, um den resonanten, insbesondere doppeltresonanten, Betrieb stabil aufrecht zu erhalten, so verändert sich dadurch die projizierte Trajektorie über die Zeit kontinuierlich, da sich in den meisten Anwendungsfällen die Resonanzfrequenz des Systems, insbesondere in Abhängigkeit von der Temperatur, zeitlich verändern kann. Eine leichte Abweichung auf der einen oder anderen Achse in Frequenz oder Phase kann die Trajektorie aber schon massiv beeinflussen, wie die folgenden beispielhaften, mittels Simulation generierten Trajektorien in **Fig. 1A** zeigen. Die Linien entsprechen dabei dem Weg des Laser-Spots auf einer senkrecht zur optischen Achse der Abbildung stehenden auszuleuchtenden rechteckigen Projektionsfläche. Der Zeitraum der Berechnung beträgt jeweils (1/60) s, also ca. 16,66 ms (dies entspricht genau einem zu projizierenden Bild (Frame) bei einer üblichen Bildwiederholrate von 60 Hz).

Die **Fig. 1A** **(a)** zeigt ein erstes Beispiel für die berechnete Trajektorie 100 bei Schwingungs- bzw. Antriebsfrequenzen f₁ und f₂ für die beiden orthogonalen Schwingungsachsen von f₁ = 26314 Hz und f₂ = 557 Hz. Bei einem zweiten, in **Fig. 1A** **(b)** gezeigten Beispiel liegen die Schwingungs- bzw. Antriebsfrequenzen dagegen bei f₁ = 26314 Hz und f₂ = 557,1 Hz, d.h. die Frequenz f₂ der zweiten Achse ist gegenüber dem ersten Beispiel um 0,1 Hz verstimmt. Die zu den beiden Achsen korrespondierenden Dimensionen der Projektionsfläche bzw. der Lissajous-Figur darauf sind mit einem unterlegten Pixelraster beschriftet. Für diese Betrachtungen soll demnach eine heute typische Auflösung von 1920 x 1080 Pixeln, d.h. mit 1920 Pixeln für die horizontale erste Achse mit der Frequenz f₁ und mit 1080 Pixeln für die horizontale zweite Achse mit Frequenz f₂, zugrunde gelegt werden.

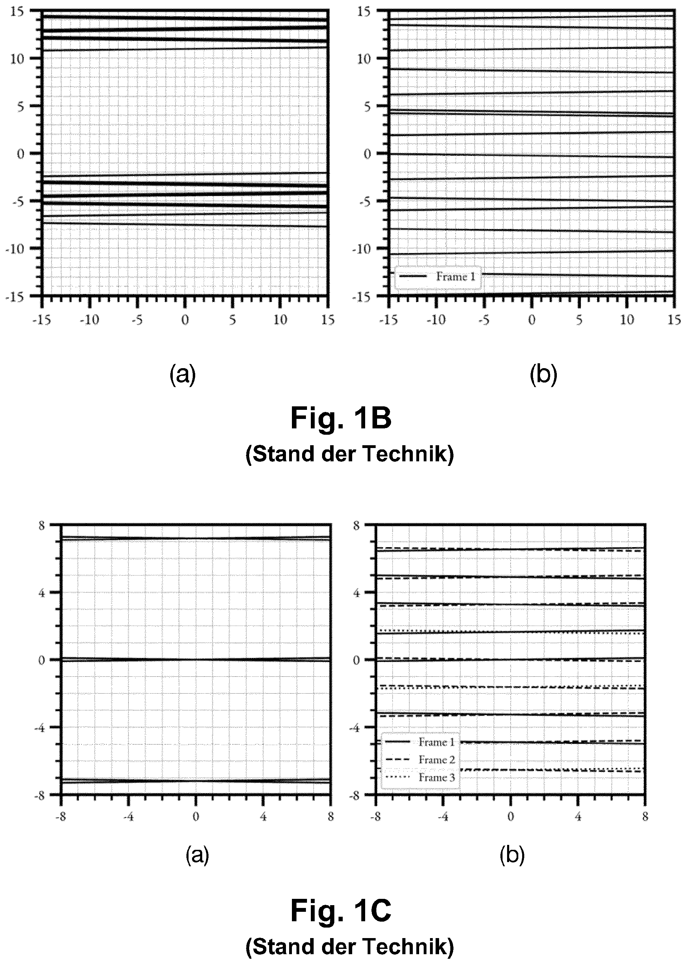

Um in den folgenden Betrachtungen die Unterschiede der beiden Trajektorien aus **Fig. 1A** genauer sichtbar zu machen, ist in **Fig. 1B** je Trajektorie aus Fig. 1A ein vergrößerter Ausschnitt aus der Mitte des jeweiligen Trajektorienverlaufs aus Fig. 1A gezeigt. Dabei wird aufgrund der Vergrößerung gut sichtbar, dass eine Verschiebung der Antriebsfrequenz auf der zweiten Achse um lediglich 0,1 Hz einen starken Einfluss auf die Liniendichte hat. Während die Trajektorie in **Fig. 1B** **(b)** zwar nicht homogen aber zumindest näherungsweise über die ganze Bildfläche verteilt verläuft, ist die linke Trajektorie in **Fig. 1B** **(a)** für eine Bildprojektion offensichtlich äußerst ungünstig, da sie eine hohe Anzahl an ganzen Zeilen von Pixeln gar nicht erreicht.

Folgen nun, wie oben beschrieben, die Antriebsfrequenzen auf beiden Achsen immer den sich kontinuierlich verändernden Resonanzfrequenzen ohne Rücksicht auf die jeweils andere Achse, ist die projizierte Lissajous-Trajektorie nicht zeitlich konstant, sondern verändert sich abhängig von den aktuellen Resonanzfrequenzen, die insbesondere temperaturabhängig sein können. Beispielsweise könnte die o.g. Verstimmung der zweiten Achse um 0,1 Hz einer solchen Verschiebung der zugehörigen Resonanzfrequenz dieser Achse entsprechen. Somit können sich mit fortschreitender Zeit aufgrund der zeitlichen Veränderung der Resonanzfrequenz einer oder beider Achsen nahezu beliebige Trajektorien einstellen - unter anderem auch solche, bei denen wie in Fig. 1B (a) beispielhaft dargestellt, die einzelnen Linien für den Betrachter deutlich sichtbar werden und große Teile des per Projektion darzustellenden Bildes unausgeleuchtet bleiben.

Somit ist der zeitliche Verlauf einer solchen Lissajous-Trajektorie in einem gewissen Rahmen dem Zufall überlassen, da sie von dem zeitlich variablen Verhältnis der Resonanzfrequenzen beider Achsen abhängt und die Liniendichte folglich starken zeitlichen Schwankungen unterworfen sein kann, die der Betrachter mitunter auch mit bloßem Auge wahrnehmen kann.

Lissajous-Trajektorien lassen sich mathematisch beschreiben, indem die Schwingungsfrequenzen *f*₁ bzw.. *f*₂ der beiden Achsen jeweils als Produkt aus einem ganzzahligen Faktor n₁ bzw. n₂ und einer Wiederholrate *fᵣₑₛ* der Trajektorie (Trajektorienwiederholrate) dargestellt werden: ${f}_{1} = {n}_{1} ⋅ {f}_{res} bzw . {f}_{2} = {n}_{2} ⋅ {f}_{res}$ (1)

Sind die Schwingungsfrequenzen auf diese Weise aufzulösen und die beiden ganzzahligen Faktoren n₁ und. n₂ teilerfremd, so bildet sich eine stabile Trajektorie aus, die sich nach der Zeit *Tᵣₑₛ* (Dauer eines Phasendurchlaufs) ${T}_{res} = \frac{1}{{f}_{res}}$ (2) exakt reproduziert. Sie legt demnach innerhalb jeder Periode *Tᵣₑₛ* immer den gleichen Weg zurück und ist nach eben dieser Zeit immer am gleichen Punkt. Aus rein mathematischen Gründen lassen sich jedoch nicht alle denkbaren Paare von Schwingungsfrequenzen auf diese Weise darstellen, sondern nur solche Frequenzpaare, bei denen das Verhältnis der beiden Frequenzen des Frequenzpaares eine rationale Zahl ist, d.h. wo gilt: ${f}_{1} / {f}_{2} = {n}_{1} / {n}_{2}$ (3)

Andere Frequenzpaare unterscheiden sich durch eine jeweilige Differenzfrequenz Δf auf der einen und/oder anderen Achse von einem nächstliegenden Frequenzpaar zu einer stabilen Trajektorie. Solche von stabilen Trajektorien abweichenden Trajektorien hinterlassen dann den optischen Eindruck, dass sie zwar zunächst die Trajektorie des ihnen nächstgelegenen stabilen Falles näherungsweise nachbilden, sich dann allerdings im Weiteren abhängig von Δf mit einer bestimmten Geschwindigkeit bewegen ("wandern"). Die Trajektorie verläuft somit in ihrem während eines in einem beliebigen m-ten Phasendurchlauf entstehenden m-ten Trajektorienabschnitts gegenüber dem während des unmittelbar nachfolgenden (m+1)-ten Phasendurchlauf entstehenden (m+1)-ten Trajektorienabschnitts in Abhängigkeit des Werts von Δf mehr oder weniger stark versetzt.

Vor diesem Hintergrund sind die Figuren 1A und 1B so zu interpretieren, dass der Fall (a) eine Trajektorie ausbildet, die aufgrund der beiden Schwingungsfrequenzen sehr nah an einer stabilen Trajektorie mit hoher Wiederholrate *fᵣₑₛ* liegt, sodass jeder Durchlauf der Trajektorie nahezu dem vorigen entspricht und die einzelnen Linien - wie in Abb. Fig. 1B (a) ersichtlich - fast zur Deckung kommen. Daher lässt eine solche Trajektorie einen großen Anteil der Pixel unberücksichtigt. Der Fall (b) liefert dagegen einen zeitlich stärker "wandernden" Trajektorienverlauf von Bild zu Bild, wobei in dem betrachteten Zeitraum von ca. 16,6 ms, der zu einem Phasendurchlauf sowie hier auch zur Dauer eines einzigen Bilds korrespondiert, eine gleichmäßigere Ausleuchtung erreicht wird, die sich jedoch in nachfolgenden Zeiträumen bzw. Bildern auch zu ungünstigeren Ausleuchtungen hin verschieben kann.

Eine weitere Problematik bei herkömmlichen Lösungen tritt auf, wenn die Bildwiederholrate sich von der Trajektorienwiederholungsrate *fᵣₑₛ* unterscheidet. Dieser Fall soll nun unter Bezugnahme auf die **Fig. 1C** erläutert werden, wobei beispielhaft wieder von einem Bildmaterial mit einer Bildwiederholrate von 60 Hz ausgegangen wird.

Fig. 1C zeigt in ihren Teilfiguren (a) bzw. (b) auf entsprechende Weise wie bei Fig. 1B zwei Ausschnitte aus beispielhaften stabilen Lissajous-Trajektorien (ein vollständiger Phasendurchlauf) für einen Zeitabschnitt mit der Dauer dreier aufeinanderfolgende Bilder, d.h. Frames, des Bildmaterials. Die drei Frames 1, 2 bzw. 3 sind mit unterschiedlichen Linienarten dargestellt. Im Fall der **Fig. 1C** **(a)** haben die als Folge der jeweils achsenbezogenen Phasenregelung den Resonanzfrequenzen entsprechenden Antriebsfrequenzen die folgenden Werte: *f*₁ = 26314 Hz und *f*₂= 557,5 Hz, woraus nach der o.g. Beziehung (1) eine Trajektorienwiederholungsrate mit dem Wert *fᵣₑₛ =* 111,5 Hz mit *n*₁ = 256 und *n*₂ = 5 folgt. Im Fall der **Fig. 1C** **(b)** haben die Resonanzfrequenzen bzw. Antriebsfrequenzen dagegen die folgenden Werte: *f*₁ = 26314,753 Hz und *f*₂ = 557,194 Hz, woraus eine gegenüber dem Fall aus Fig. 1C (a) deutlich niedrigere Trajektorienwiederholungsrate *fᵣₑₛ* = 25,327 Hz mit *n*₁ = 1039 und *n*₂ = 22 folgt, sodass *n*₁ und *n*₂ teilerfremd sind.

Im Falle der Fig. 1C (a) lässt die Trajektorie während ihres vollständigen Phasendurchlaufs aufgrund ihrer hohen Wiederholrate wesentliche Bildinhalte aus, so dass im Betrachtungszeitraum nur ein Teil des ersten Frames und weder der zweite noch der dritte Frame bei der Projektion dargestellt werden. Im umgekehrten Fall von Fig. 1C (b) ist dagegen Trajektorienwiederholungsrate so niedrig, dass innerhalb der Dauer eines Frames (z.B. Frame 1) sogar einige Zeilen gar nicht abgetastet werden. Folglich wird beispielsweise die unterste dargestellte Zeile erst ab dem zweiten Frame (Frame 2) erreicht.

Aus diesem Grund zielen bisher bekannte Konzepte, die sich der Trajektoriendichte widmen, zumeist darauf ab, stabile Lissajous-Trajektorien zu projizieren, deren Trajektorienwiederholrate in etwa im Bereich der Bildwiederholrate des zu projizierenden Bildmaterials liegt. Dadurch ist nur ein vergleichsweise kleiner Wertebereich für Trajektorienwiederholungsrate *fᵣₑₛ* zugelassen und es kommt nur ein stark eingeschränkter Wertebereich an Paaren von Antriebsfrequenzen infrage. Da zudem stabile Trajektorien zwangsläufig immer die gleichen Bildinhalte auslassen, können selbst bei diesem vermeintlichen Idealfall derjenigen Trajektorien, die sich etwa mit der Framerate des Bildmaterials wiederholen, für den Betrachter erkennbare unausgeleuchtete Bildinhalte auftreten, wenn die Resonanzfrequenzen des Mikroscannersystems nicht bereits im Fertigungsprozess so hoch ausgelegt werden, dass die resultierende Trajektorie innerhalb eines Phasendurchlaufes alle Pixel erreichen kann.

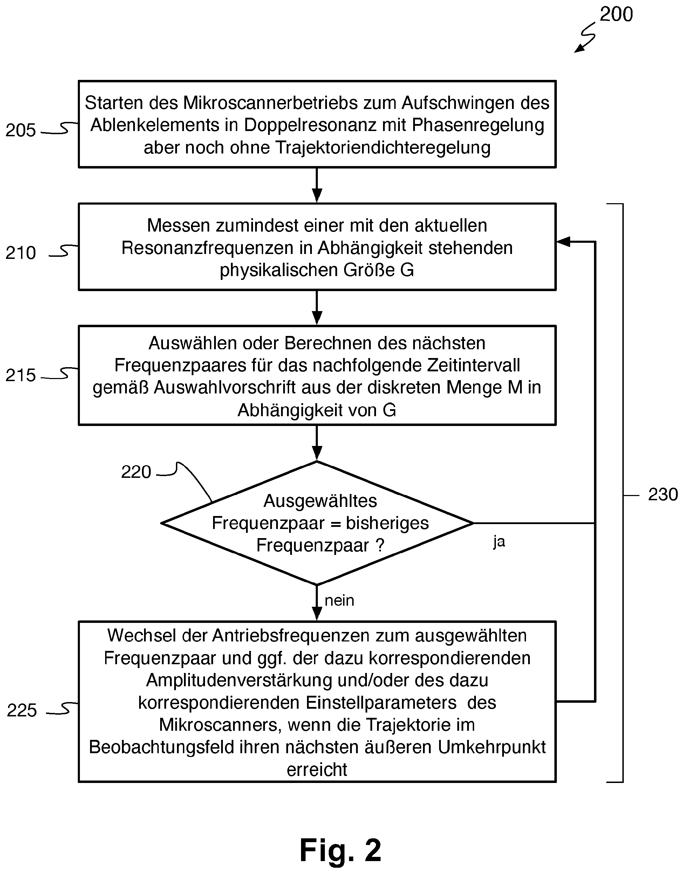

Bezugnehmend auf **Fig. 2** wird nun eine beispielhafte Ausführungsform 200 eines lösungsgemäßen Verfahrens zur Trajektorienregelung eines Mikroscannersystems mit einem zweiachsigen Mikroscanner erläutert. Das Verfahren 200 wird ausgehend von einem Ruhezustand des Mikroscanners beschrieben. Zunächst wird daher der Betrieb des Mikroscanners gestartet, sodass sich ein Einschwingvorgang ergibt, bei dem sich die Schwingungsamplitude bis hin zu einem Maximum erhöht ("Aufschwingen").

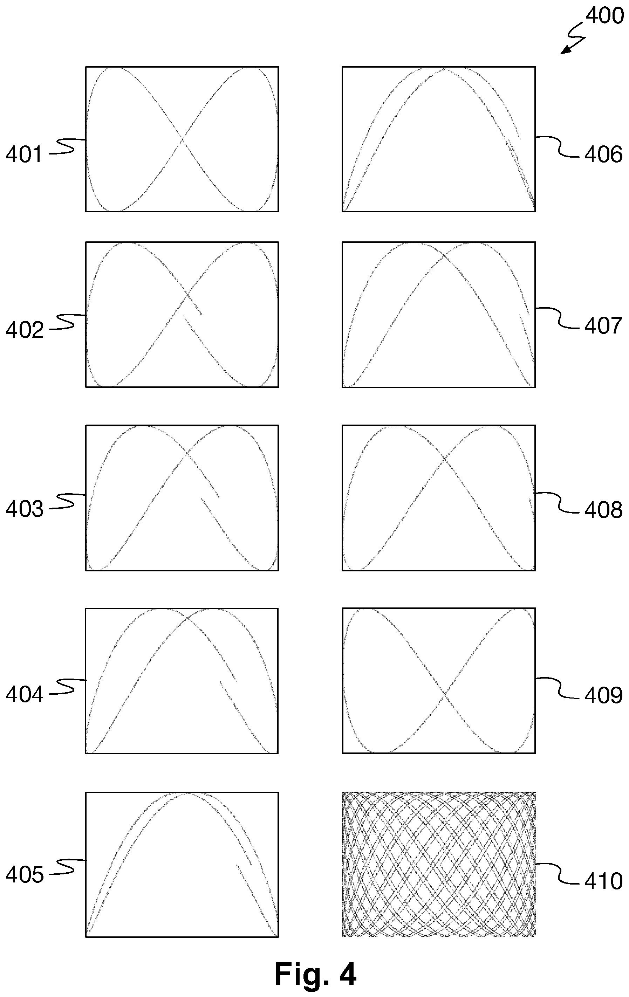

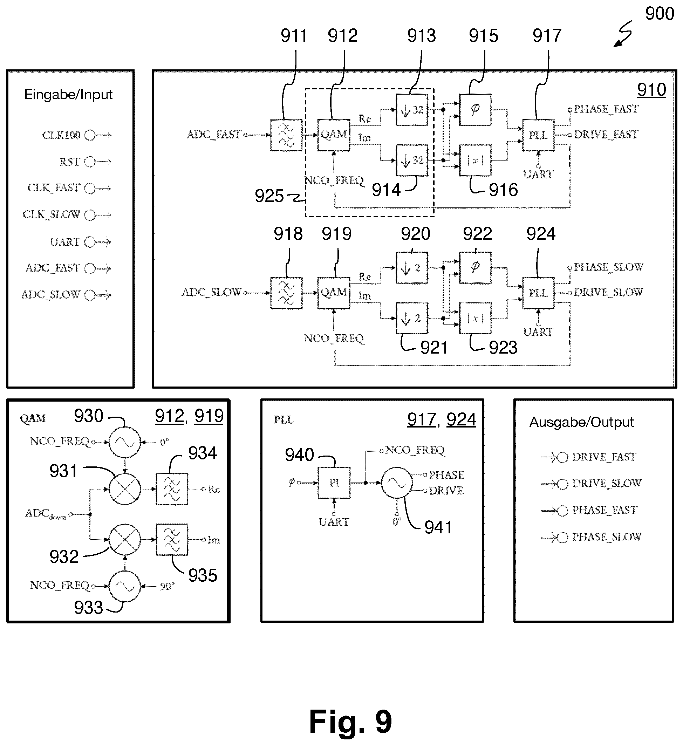

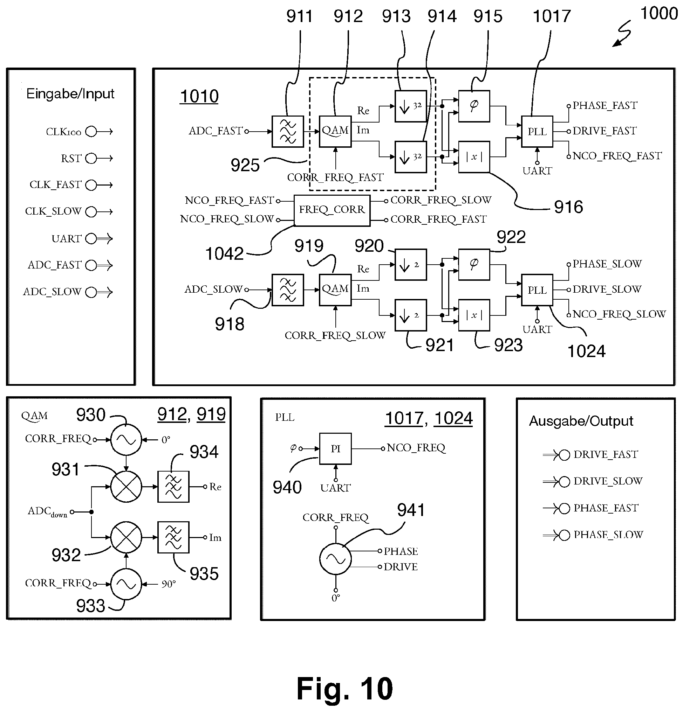

Die Oszillationsbewegungen des schwingungsfähigen Anteils des Mikroscanners, d. h. insbesondere des Ablenkelement (Spiegel) einschließlich seiner Aufhängung, werden dabei mittels einer geeigneten Antriebseinrichtung, die insbesondere einen oder mehrere Piezoaktuatoren aufweisen kann, so angetrieben, dass als Ergebnis des Aufschwingens eine biaxiale doppeltresonante Schwingung bezüglich einer ersten und einer dazu orthogonalen zweiten Schwingungsachse des Ablenkelements auftritt. Der Mikroscanner wird also während des Aufschwingens so betrieben, dass er, jedenfalls am Ende des Aufschwingvorgangs, bezüglich jeder der beiden Achsen mit der jeweils zugehörigen aktuellen Resonanzfrequenz schwingt. Dies kann insbesondere mittels einer herkömmlichen Phasenregelung (noch ohne zusätzliche Trajektorienregelung) je Achse erfolgen, wie im Weiteren unter Bezugnahme auf die Figuren 9 und 10 erläutert werden wird. Bei der Projektion eines auf das schwingende Ablenkelement gerichteten und dort reflektierten Laserstrahls ergibt sich dann im Beobachtungsfeld eine geschlossene, stabile Trajektorie. Ein einfaches Beispiel für eine solche stabile Trajektorie ist in Fig. 4 im Bild 401 zu sehen.

Während des Aufschwingens oder wenn der Aufschwingvorgang bereits abgeschlossen ist und eine stabile Trajektorie vorliegt, erfolgt in einem Schritt 210 eine Messung zumindest einer physikalischen Größe G, die mit den zu diesem Zeitpunkt aktuellen Resonanzfrequenzen des Mikroscanners zu den beiden Achsen in Abhängigkeit steht. Die Abhängigkeit kann insbesondere so sein, dass (i) die physikalische Größe G von den Resonanzfrequenzen abhängt, (ii) umgekehrt die Resonanzfrequenzen von der physikalischen Größe G abhängen, oder (iii) eine wechselseitige Abhängigkeit besteht. Idealerweise entspricht die Abhängigkeit einer mathematischen Funktion. Entscheidend ist, dass aus dem gemessenen Wert von G auf die Resonanzfrequenzen geschlossen werden kann. Im Falle mehrerer gemessener physikalischer Größen (Anzahl n) können diese insbesondere als Satz von Werten oder Vektor G = {G₁,...,Gₙ} zu einer multidimensionalen Größe G zusammengefasst werden.

Nun kann in einem Schritt 215 in Abhängigkeit von G gemäß einer vorbestimmten Auswahlvorschrift ein Frequenzpaar für die Antriebsfrequenzen zu den beiden Achsen für ein nachfolgendes Zeitintervall bestimmt werden. Dies kann beispielsweise mittels Auswahl aus einer, beispielsweise in einer Speichervorrichtung, vorgehaltenen diskreten Menge von Frequenzpaaren oder aber unmittelbar während des Verfahrensablaufs durch Bestimmung, insbesondere Berechnung, eines solchen Frequenzpaares gemäß der Auswahlvorschrift erfolgen, die in diesem Fall insbesondere eine entsprechende Rechenvorschrift enthalten kann.

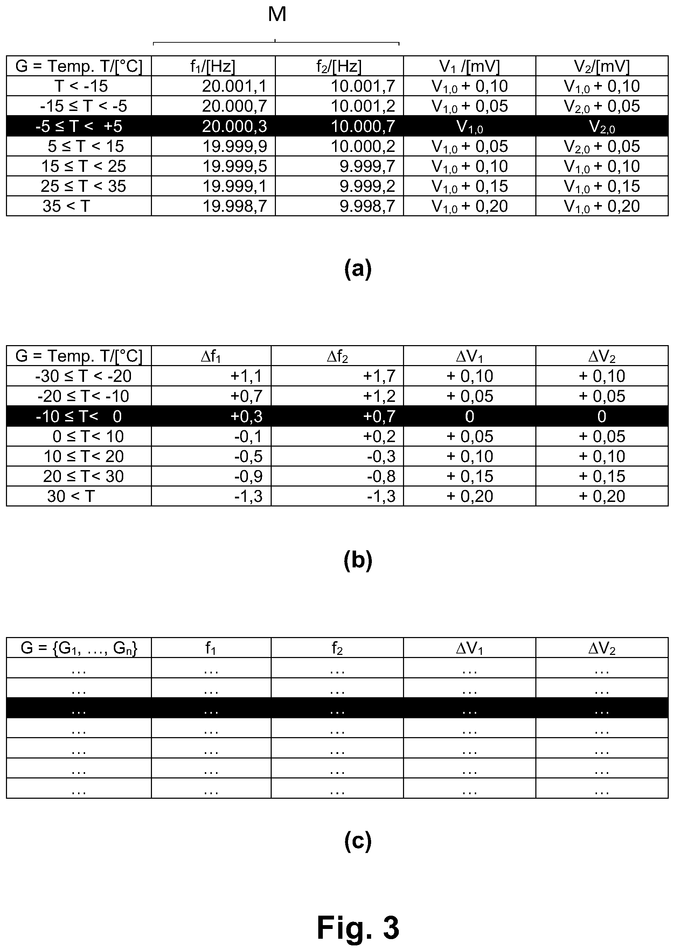

Zur genaueren Erläuterung des Schritts 215 wird nun auf **Fig. 3** bezuggenommen. Dort ist anhand von drei Wertetabellen, die - wie erläutert - entweder bereits vorgehalten oder aber im Sinne einer Rechenvorschrift implementiert sein können, je eine solche Auswahlvorschrift gemäß Schritt 215 beispielhaft illustriert. In diesem Beispiel wird für die ersten beiden Tabellen in Fig. 3 (a) und (b) eine Temperatur des Mikroscanners, die insbesondere berührungslos, beispielsweise mittels Infrarotmessung oder über ein NTC-Messelement im oder am Mikroscanner, bestimmt werden kann, als skalare physikalische Größe G genutzt. Die jeweilige Tabelle ordnet jedem Wert von G ein zugehöriges Frequenzpaar {f₁; f₂} zu. Um dies zu illustrieren, ist jeweils eine Zeile jeder Tabelle invertiert dargestellt. Liegt also die durch den Wert der Größe G gegebene Temperatur beispielsweise bei -7 °C, so wird gemäß der Auswahlvorschrift gemäß **Fig. 3** **(a)** das Frequenzpaar {f₁; f₂} = {20.000,3 Hz; 10.000,7 Hz} ausgewählt. Dabei liegt im vorliegenden Beispiel eine nächstliegende zumindest theoretisch für den Mikroscanner erreichbare Resonanzfrequenz für die erste Achse bei f_{0,1} = 20.000 Hz und für die zweite Achse bei f_{0,2} = 10.000 Hz, so dass stets gewährleistet ist, dass sich das aus der Tabelle ergebende Frequenzpaar {f₁;f₂} von dem Frequenzpaar {f_{0,1};f_{0,2}} der genannten nächstliegenden Resonanzfrequenzen bezüglich zumindest einer der beiden Frequenzen bzw. Achsen unterscheidet (also f₁# f_{0,1} und/oder f₂≠ f_{0,2}).

In **Fig. 3** **(b)** ist dieselbe Auswahlvorschrift nochmals, jedoch in anderer und im Hinblick auf die angestrebte systematische Abweichung des auszuwählenden Frequenzpaares von dem Frequenzpaar {f_{0,1}; f_{0,2}} besonders zweckmäßiger Form, dargestellt. Anstelle unmittelbar die Frequenzwerte für das auszuwählende Frequenzpaar anzugeben, sind die Frequenzwerte hier mittelbar durch die entsprechenden Frequenzabweichungen gegenüber von dem Frequenzpaar {f_{0,1}; f_{0,2}}. Dementsprechend ergeben sich die Frequenzabweichungen aus der Tabelle in Fig. 3 (b) als Δf₁ = +0,3 Hz bzw. Δf₂ = +0,7 Hz. Bei Kenntnis der Resonanzfrequenzen {f_{0,1}; f_{0,2}} sind die beiden Darstellungen somit äquivalent und definieren beide dieselbe Auswahlvorschrift und somit je Auswahlvorgang auch das jeweils ausgewählten Frequenzpaar {f₁; f₂}.

In **Fig. 3** **(c)** ist noch der Fall illustriert, dass anstelle einer einzigen physikalischen Größe ein Satz von mehreren verschiedenen physikalischen Größen gemessen und das auszuwählende Frequenzpaar in Abhängigkeit diesem Satz von Größen G = {G₁, ..., Gₙ} bestimmt wird. Ein bestimmtes Frequenzpaar wird hier also ausgewählt, wenn der gemessene Satz G von Größen in einen dem Frequenzpaar zugeordneten Raumbereich in dem multidimensionalen durch die einzelnen Größen G₁, ..., Gₙ aufgespannten (mathematischen) Raum fällt (betrachtet man G als Vektor, dann kann der Raum als ein n-dimensionaler Vektorraum betrachtet werden). Zusätzlich oder anstelle der Temperatur können solche physikalischen Größen insbesondere eine mechanische Spannung oder Dehnung, eine Schwingungsamplitude oder eine bei zumindest einer der Oszillationen auftretende Phaseninstabilität des Mikroscanners sein. Zusätzlich oder stattdessen können insbesondere auch eine oder mehrere der folgenden Größen verwendet werden: ein Überschreiten der Stellgröße der verfahrensgemäßen Trajektorienregelung; eine Phasendifferenz zwischen einem Antriebssignal zur Ansteuerung der Antriebseinrichtung und einem Messsignal, das eine gemessene Auslenkung des Ablenkelements repräsentiert; eine Verschiebung der jeweiligen achsenzugehörigen Resonanzfrequenz; eine Veränderung der eingestrahlten elektromagnetischen Strahlungsleistung, die das Ablenkelement durch Absorption aufnimmt; eine Veränderung der Amplitude, der Frequenz oder der Phase eines Referenzoszillators für die Schwingung des Ablenkelements.

In den drei Tabellen aus Fig. 3 sind zusätzlich zu der jeweiligen diskreten Menge M von Frequenzpaaren auch eine zugehörige Menge von diskreten Amplitudenpaaren {V₁; V₂} bzw. {ΔV₁; ΔV₂} enthalten, die in Form von Spannungsamplituden für die Ansteuerung der Antriebseinrichtung als Amplitudenwerte bzw. Amplitudenabweichungswerte bezüglich von Referenzamplituden, die insbesondere den Schwingungsamplituden im doppeltresonanten Fall sprechen können, im Hinblick auf eine im Rahmen der Trajektorienregelung des Verfahrens zusätzlich zu der Frequenzregelung möglichen Amplitudenregelung darstellen. Wie schon bei den Frequenzpaaren, sind auch bezüglich der Amplitudenpaare bzw. insgesamt Mischformen möglich, bei denen einerseits absolute Frequenz- bzw. Amplitudenwerte, andererseits aber auch entsprechende Abweichungswerte bezüglich entsprechender Referenzwerte im Rahmen der Auswahlvorschrift festgelegt sind.

Nun wieder bezugnehmend auf **Fig. 2****,** folgt dem Schritt 215 ein weiterer Schritt 220, bei dem geprüft wird, ob das gemäß Schritt 215 ausgewählte Frequenzpaar dem schon aktuell geltenden Frequenzpaar entspricht, ob also keine Frequenzanpassung erforderlich ist oder schon. Entsprechen sich die beiden Frequenzpaare (220 - ja), so verzweigt das Verfahren zurück zum Schritt 210 für einen neuen Durchlauf. Andernfalls (220 - nein) erfolgt in einem Schritt 225 ein Wechsel der Antriebsfrequenzen für die Antriebseinrichtung des Mikroscanners hin zum im Schritt 215 ausgewählten neuen Frequenzpaar und gegebenenfalls neuen Amplitudenpaar, das eine entsprechende Amplitudenverstärkung oder Reduzierung (= negative Amplitudenverstärkung) festlegt. Ein solcher Wechsel ist gleichbedeutend mit dem Beginn eines neuen Zeitintervalls, da hier der Begriff "Zeitintervall" zu einem bestimmten Frequenzpaar bzw. dem Zeitraum zwischen zwei aufeinanderfolgenden Frequenzpaarwechseln, währenddessen das bestimmte Frequenzpaar zum Antrieb des Mikroscanners verwendet wird, korrespondiert.

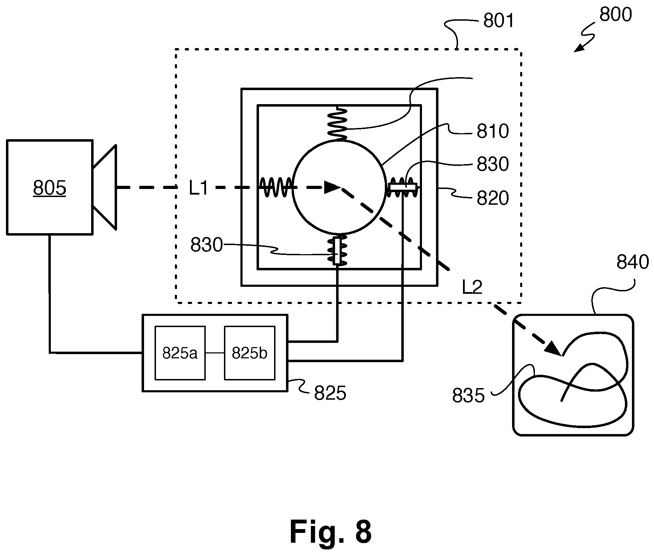

Anschließend wird wiederum zum Schritt 210 für einen weiteren Verfahrensdurchlauf zurückverzweigt. Die Schritte 210 bis 225 stellen insgesamt eine, zusätzlich zu einer gegebenenfalls vorhandenen reinen Phasenregelung vorgesehene, Trajektorienregelung 230 dar, mittels welcher der Verlauf der bei beim Betrieb des Mikroscanners bzw. eines darauf aufbauenden Strahlablenksystems (vgl. Fig. 8) resultierenden Trajektorie in Abhängigkeit von der zumindest einen physikalischen Größe G und somit vom zeitlichen Verlauf der aktuellen Resonanzfrequenzen geregelt wird. Insbesondere kann so bei geeigneter Festlegung der Frequenzpaare und des Auswahlvorschrift eine Trajektoriendichteregelung erfolgen, die eine weitgehend homogene Ausleuchtung des Beobachtungsfelds und somit eine entsprechend hohe Bildqualität der in das Beobachtungsfeld projizierten Bilder liefern kann.

**Fig. 4** illustriert eine beispielhafte, sich bei Anwendung des Verfahrens zur Trajektorienregelung, insbesondere gemäß Fig. 2, erzeugbare Folge 400 von Trajektorienabschnitten 401 bis 409, die jeweils zu einem vollständigen Phasendurchlauf der Trajektorie korrespondieren. Im weiteren Bild 410 ist die durch Aneinanderreihung dieser Trajektorienabschnitte 401 bis 409 entstehende geregelte Trajektorie dargestellt. Sämtliche Darstellungen in Fig. 4 ergeben sich jeweils bei einer Lissajous-Projektion mittels eines Mikroscanners auf eine Projektionsfläche in einem auszuleuchtenden Beobachtungsfeld (vgl. Fig. 8). Im Folgenden wird, ohne dass dies als Einschränkung zu verstehen wäre, zum Zwecke der besseren Erläuterung konkret auf die Ausführungsform 200 des Verfahrens gemäß Fig. 2 bezuggenommen.

Das Bild 401 stellt eine stabile Trajektorie dar, wie sie sich insbesondere am Ende des Aufschwingvorgangs gemäß Schritt 205 des Verfahrens 200 ergeben kann. Eine solche Lissajous-Trajektorie wird beispielsweise von einem Spiegel mit (aktuellen) Resonanzfrequenzen von *f*_{0,1} = 10 *kHz* und *f*_{0,2} = 20 *kHz* projiziert. Die zugrundeliegenden Parameter der Trajektorie können nach den bekannten Schwingungsgleichungen für Lissajous-Trajektorien ${x}_{1} \left(t\right) = sin \left(2{πn}_{1}{f}_{res}⋅t\right)$ (4a) ${x}_{2} \left(t\right) = sin \left(2{πn}_{2}{f}_{res}⋅t\right)$ (4b) dann wie folgt errechnet werden: ${f}_{1} = {f}_{0 , 1} = 10 kHz , {f}_{2} = {f}_{0 , 2} = 20 kHz ⇒ {n}_{1} = 1 , {n}_{2} = 2 , {f}_{res} = 10 kHz$ (5)

Im Wesentlichen beschreiben dann die Parameter *n*₁ sowie *n*₂ die Knotenpunkte und damit die Liniendichte der Trajektorie und die Frequenz *fᵣₑₛ* - oder besser: ihr Kehrwert ${T}_{res} = \frac{1}{{f}_{res}} = 0 , 1 ms$ - die Dauer, nach der der Weg der Trajektorie einmal vollständig durchlaufen ist (Phasendurchlauf). Ein Mikroscanner mit einem Verhältnis der Resonanzfrequenzen von f_{0,1}:f_{0,2} = *n*₁:*n*₂ = 1:2 projiziert, insofern dieses Verhältnis durch das Antriebsfrequenzpaar {f₁; f₂} genau getroffen wird und die Resonanzfrequenzen zeitlich konstant bleiben, dauerhaft die in Bild 401 gezeigte stabile Trajektorie.

Wenn sich jedoch eine zeitabhängige Verstimmung der Resonanzfrequenzen ergibt, beispielsweise aufgrund einer Temperaturänderung des Mikroscanners, dann kann die Frequenzregelung 230 je nach geltender Auswahlvorschrift bewirken, dass anstelle des ursprünglichen, mit den ursprünglichen Resonanzfrequenzwerten übereinstimmenden Frequenzpaares, nun ein anderes Frequenzpaar {f₁; f₂} aus der diskreten Menge M (vgl. Fig. 3) die Antriebsfrequenzen für den Antrieb des Mikroscanners mittels der Antriebseinrichtung definiert. Entsprechend der Definition der Menge M weicht dieses neue Frequenzpaar zumindest bezüglich einer seiner beiden Frequenzen von einer aktuellen Resonanzfrequenz ab, d.h. es gilt: f₁ ≠ f_{0,1} und/oder f₂ ≠ f_{0,2}.

Die in Bild 401 gezeigte stabile Trajektorie lässt offensichtlich den Großteil des Bildes unausgeleuchtet, sodass über die Frequenzverschiebung *n*₁ und *n*₂ so weit erhöht werden müssen, dass im Falle der Projektion eines digitalen zweidimensionalen Bildes in einer dann ebenfalls veränderten Zeitdauer ${T}_{res}^{′}$ alle Pixel des Bildes erreicht werden. Im Idealfall liegt ${T}_{res}^{′}$ unter der Dauer, die ein Bild erscheint, für übliche Videoformate also unter etwa $\frac{1}{30} s$ oder $\frac{1}{60} s$. Da das in der Praxis zumeist nicht erreicht werden kann, ergeben sich in der Regel Trajektorien, deren Periodendauer zwar wesentlich höher liegt, die aber dennoch für diese jeweiligen Teilbilder die maximal mögliche Anzahl an Pixeln erreichen und zudem in aufeinander folgenden Bildern nicht die gleichen Pixel auslassen, sodass dennoch über mehrere Phasendurchläufe hinweg der Eindruck eines zumindest weitgehend homogen ausgeleuchteten projizierten Bildes entsteht.

Dementsprechend zeigen in Fig. 4 die Bilder 402 bis 409 acht aufeinanderfolgende jeweils vollständige Phasendurchläufe zum neuen "verschobenen" Frequenzpaar {f₁; f₂} das ausgehend von {f_{0,1}; f_{0,2}} durch die Frequenzabweichungen Δ*f*₁ = 312,5 *Hz* bei gleichbleibender Antriebsfrequenz der zweiten Achse (Δ*f*₂ = 0 Hz) definiert ist. Daraus ergeben sich mit der resultierenden neuen Antriebsfrequenz *f*₁ = 10.312,5 *Hz* die Bilder 402 bis 409 in Fig. 4.

Die Trajektorie ist nun nicht mehr stabil, sondern verändert sich von Phasendurchlauf zu Phasendurchlauf, sodass die Trajektorie insgesamt über den betrachteten Zeitraum hinweg ihre Form verändert und dadurch scheinbar wandert, so dass sich die Trajektoriendichte (Liniendichte) erhöht. Dabei ist das Frequenzpaar {f₁; f₂} so definiert, dass sich die Trajektorie während ihres jeweils nächsten Durchlaufs insbesondere in solche Bildbereiche legt, die im vorigen Durchlauf nicht erreicht wurden. Über den gesamten zu den Bildern 401 bis 490 korrespondierenden Betrachtungszeitraum hinweg ergibt sich der in Bild 410 gezeigte Trajektorienverlauf, der eine annähernd homogene Ausleuchtung der rechteckigen Projektionsfläche im Beobachtungsfeld und somit eine ansprechende Bildqualität liefert, wenn die Trajektorienwiederholungsrate, wie oben genannt, so hoch ist, dass der Betrachter die Einzelbilder nicht voneinander getrennt erkennen kann.

Die Trajektorien wurden also in die zuvor ausgelassenen Bereiche "hineingeschoben", wodurch die neu entstandene Trajektorie sich deutlich besser für eine Bildprojektion eignet. Die optimalen Frequenzabweichungen, die den Grad der Verschiebung der Trajektorien bestimmt, hängt dabei offensichtlich davon ab, wie groß der Anteil an ausgelassener Fläche bei der ursprünglichen Trajektorie ist. Grundsätzlich kann die Veränderung der Frequenz jeweils auf beiden Achsen oder auch auf beiden Achsen zugleich erfolgen.

Das soeben illustrierte Beispiel aus Fig. 4 fällt dadurch auf, dass die Frequenzabweichung mit Δ*f*₁ = 312,5 *Hz* sehr hoch ausfällt. Dadurch würde die Antriebsfrequenz sehr weit von der Resonanzfrequenz dieser Achse weg verschoben, wodurch sich insbesondere bei Spiegeln mit hohen Gütefaktoren (Q-Faktoren) kein Bild mehr projizieren ließe, da die Amplitude auf dieser Achse stark oder gar komplett einbräche. Die Größe der Frequenzabweichung orientiert sich daher einerseits an dem Ziel, die Trajektoriendichte bzw. (hier gleichbedeutend) die Liniendichte zu maximieren, aber andererseits auch die Ausdehnung bzw. Größe des projizierten Bildes nicht inakzeptabel zu verkleinern, insbesondere nicht so, dass sich die Lage der Pixel verändert. Es kann aber im Einzelfall anwendungsbezogen sein, dass eine Reduktion der Bildausdehnung in gewissen Grenzen akzeptabel ist, insbesondere dann, wenn es nur auf einen Bildausschnitt (im Sinne einer "Region-of-interest") ankommt.

Wenn bzw. soweit jedoch eine bestimmte Bildausdehnung eingehalten werden soll oder muss, ist die maximale Frequenzverschiebung in Rahmen der Trajektorienregelung (vgl. Fig. 2, Trajektorienregelung 230) dadurch bestimmt, wie weit die dadurch (allein) bewirkte Ausdehnungsreduktion durch eine dem entgegenwirkende Amplitudenregelung (insbesondere Amplitudenverstärkung) kompensiert werden kann.

Vergleicht man obiges Beispiel aus Fig. 4 mit einem anderen Beispiel, bei dem eine Frequenzabweichung von nur Δ*f*₁ = 1 *Hz* gewählt wird, ist dieses Erfordernis hier insbesondere unter Zuhilfenahme einer kompensierenden Amplitudenregelung zwar leicht zu erreichen. Die Verschiebung der Trajektorie von Phasendurchlauf zu Phasendurchlauf fällt damit aber um einiges geringer aus, sodass einzelne, aufeinander folgende Phasendurchläufe (mit der ursprünglichen Umlaufdauer *Tᵣₑₛ =* 0,1 *ms*) dann für einen Betrachter mit bloßem Auge nicht mehr voneinander zu unterscheiden sind.

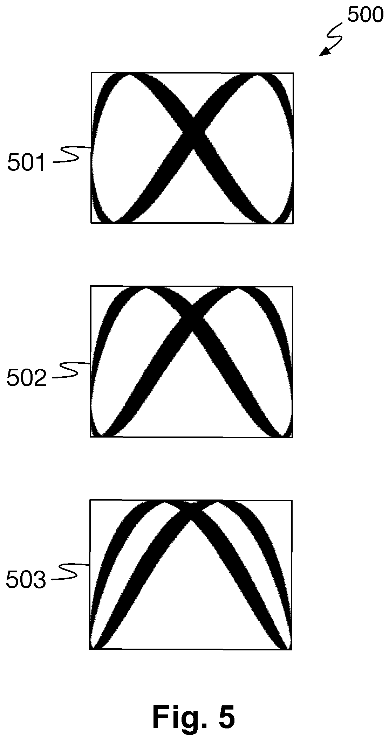

Deshalb ist es für dieses Beispiel anschaulicher, wie in **Fig. 5** gezeigt, die Trajektorie 500 für diskrete Zeiträume abzubilden, die etwa der menschlichen Wahrnehmung und üblichen Bildwiederholraten entsprechen. Diese Dauer soll hier mit $\frac{1}{30} s$ angenommen werden. In Fig. 5 sind die jeweiligen Trajektorienabschnitte, die während dreier solcher aufeinanderfolgenden Zeiträume auftreten, in den Darstellungen 501 bis 503 des auszuleuchtenden Bildbereichs illustriert.

Hier wird ein Phänomen sichtbar, das in der Praxis häufig bemerkt werden kann. Selten stellt sich dort wirklich eine langfristig stabile Trajektorie wie in Bild 401 ein. Vielmehr entsteht beim Betrachter der optische Eindruck, eine solche Trajektorie drehe sich allmählich. Die Frequenzabweichung sollte daher idealerweise so gewählt werden, dass ein menschlicher Beobachter mit bloßem Auge die Trajektorie nicht als solche wahrnehmen kann, weder als vollkommen statische noch als bewegliche. Ebenfalls zeichnet sich diese Trajektorie 500 dadurch aus, dass sie offenbar erst nach einer Vielzahl der o.g. Zeiträume alle Bildbereiche und somit im Falle eines zweidimensionalen digitalen Bildes alle Pixel dargestellt hat.

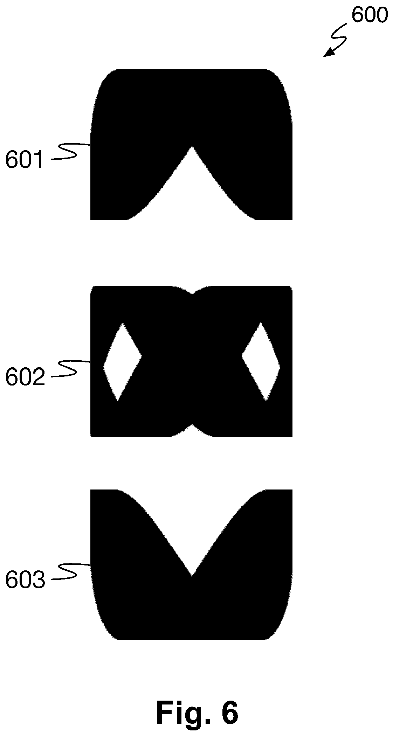

Obwohl das hier gegebene Beispiel mit Resonanzfrequenzen von *f*_{0,1} = 10*kHz* und *f*_{0,2} = 20*kHz* eine ungünstige Ausgangslage darstellt, kann durch ausreichende Verschiebung auf beiden Achsen dennoch ein Fall konstruiert werden, der typische Anforderungen an Homogenität und Ausdehnungserhaltung der Ausleuchtung gut erfüllt oder diesen, je nach Anforderungsgrad, zumindest nahekommt. Mit Δ*f*₁ = 3,92 *Hz* und Δ*f*₂ = -1,92 *Hz* werden in drei aufeinanderfolgenden Zeitintervallen von je $\frac{1}{30} s$ Dauer die drei in **Fig. 6** in den Darstellungen 601 bis 603 des auszuleuchtenden rechteckigen Bildbereichs illustrierten Trajektorienabschnitte projiziert, die sich insgesamt zu einer im Wesentlichen vollständigen Ausleuchtung 600 des Bildbereichs ergänzen. Damit sind zumindest nach je drei aufeinanderfolgenden Zeitintervallen im Falle eines digitalen Bilds auch alle Pixel erreicht, wobei bereits nach zwei Intervallen fast alle Pixel dargestellt, d.h. projiziert, wurden, und damit ein für diese Resonanzfrequenzen günstiger Projektionsfall vorliegt.
A) Um einen geeigneten Satz von Frequenzpaaren für die diskrete Menge M festzulegen, eignet sich insbesondere eine erste Ausführungsform in dieser Hinsicht, bei der man von einen maximalen Linienabstand zwischen benachbarten Linienverläufen der Trajektorie ausgeht, um den Satz von Frequenzpaaren zu bestimmen.

Diese Ausführungsform ist als Ergänzung der Ausführungsform aus Anspruch 1 insbesondere dann vorteilhaft im Zusammenhang mit Lissajous-Projektionen anwendbar, wenn dabei Frequenzpaare festgelegt werden, deren zugehörigen Trajektorienwiederholraten (insbesondere deutlich) unter der Bildwiederholrate des zu projizierenden Bildmaterials (z.B. Video) liegen. Beispielsweise könnten bei einer Bildwiederholrate von 30 Hz Frequenzpaare festgelegt werden, deren zugehörigen Trajektorienwiederholraten im Bereich von 5 Hz bis 15 Hz liegen. Von solchen Trajektorien kann man dann a priori annehmen, dass sie sich von Bild zu Bild, also für Beobachtungszeiträume von $\frac{1}{30} s$, verändern.

Die Linienabstände benachbarter Trajektorienabschnitte einer Lissajous-Figur sind in aller Regel in der Mitte der Lissajous-Figur im Schnitt größer als an ihrem Rand. Der maximale Linienabstand *dₘₐₓ* tritt ebenfalls typischerweise in bzw. nahe der Mitte der Lissajous-Figur auf. Für *dₘₐₓ* gelten dabei die folgenden Beziehungen, wobei sich der Index "1" auf einen Abstand bezüglich der durch die erste Schwingungsachse bedingten Bildausdehnung bezieht und sich der Index "2" auf einen Abstand bezüglich der durch die zweite Schwingungsachse bedingten Bildausdehnung bezieht: $2 ⋅ {d}_{1 , max} = sin \left(\frac{π}{{n}_{2}}\right)$ (6a) $2 ⋅ {d}_{2 , max} = sin \left(\frac{π}{{n}_{1}}\right)$ (6b)

Über diese Abstände kann man nun also Sollwerte für die schon aus der Beziehung (1) bekannten Faktoren *n*₁ sowie *n*₂ bestimmen, wenn man die maximalen Linienabstände *d*_{1*,max*} und *d*_{2,*max*} vorgibt. Beispielsweise kann man im Falle einer Full-HD-Auflösung mit 1920 Pixeln in horizontaler Bildrichtung und 1080 Pixeln in vertikaler Bildrichtung festlegen, dass der maximale Linienabstand in jeder dieser Richtungen einem Pixel entsprechen soll. Normiert man die Bildhöhe und Bildbreite jeweils auf den Wert 1, dann ergibt sich somit: ${d}_{y , max} = \frac{1}{1080} und {d}_{x , max} = \frac{1}{1920} .$ (7)

Aus den Beziehungen (6a) und (6b) ergeben sich dann folgende untere Schwellen für die Werte von *n*₁ und *n*₂, die jeweils natürliche Zahlen sind: ${n}_{x} \geq 1696 und {n}_{y} \geq 3016 .$ (8)

Man kann nun unter Einhaltung dieser Schwellen Wertepaare (*n*₁ ; *n*₂) identifizieren, die zugleich das Kriterium der Teilerfremdheit von *n*₁ und *n*₂ erfüllen. Bevorzugt wird auf diese Weise eine diskrete, beschränkte und endliche Menge von Wertepaaren ( *n*₁ ; *n*₂) bzw. gemäß den Beziehungen (1) und (3) dazu korrespondierenden Frequenzpaaren (f₁; f₂) gesucht und bestimmt, die so nah wie möglich an diesen Schwellen aus Beziehung (8) liegen, da sonst die Trajektoriendurchlaufzeit sehr groß wird und sich insbesondere der Bildwiederholungsrate nähern oder diese sogar übertreffen kann.

Betrachtet man insbesondere ein Mikroscannersystem, das zumindest näherungsweise einen Raster-Scan-Aufbau der projizierten Trajektorie liefert, muss lediglich das Kriterium (6b) für *d*_{2,*max*} erfüllt sein, da die Linien der Trajektorie annähernd horizontal verlaufen und dann dennoch alle Pixel treffen. Das soll nun beispielhaft für ein Mikroscannersystem mit Resonanzfrequenzen von ungefähr *f*_{0,1} = 18418 *Hz, f*_{0,2} = 631 *Hz* veranschaulicht werden.

Teilt man gemäß Beziehung (1) die die Resonanzfrequenz *f*_{0,1} der schnellen Achse durch den genannten Faktor von 1696, ergibt sich etwa *fᵣₑₛ* = 10,86 *Hz.* Man kann nun, gemäß dem vorausgehend beschriebenen Vorgehen Frequenzpaare (f₁; f₂) für die Menge M ermitteln, welche Trajektorien ausbilden, die möglichst nah an dieser Trajektorienwiederholrate *fᵣₑₛ* liegen, die also die Teilerfremdheit für die beiden Faktoren *n*₁ und *n*₂ erfüllen und mit dieser Trajektorienwiederholrate *fᵣₑₛ* auf beiden Achsen etwa bei den genannten Resonanzfrequenzen *f*_{0,1} bzw. *f*_{0,2} landen. Bei diesen Trajektorien wird zwar dann je nach Wahl des Frequenzpaars (f₁; f₂) das Bild etwas langsamer aufgebaut als für eine "ideale" Trajektorie mit der Trajektorienwiederholrate *fᵣₑₛ* oder es wird nicht mehr jeder Pixel getroffen, jedoch ergibt sich eine gute Näherung an die ideale Trajektorie.

B) Um einen geeigneten Satz von Frequenzpaaren für die diskrete Menge M festzulegen, eignet sich zudem eine zweite Ausführungsform in dieser Hinsicht, die allein oder insbesondere auch in Kombination mit der vorausgehend beschriebenen Ausführungsform A) anwendbar ist. Bei ihr werden ausgehend von einem oder mehreren für den konkreten Mikroscanner potentiell möglichen Resonanzfrequenzpaaren {*f*_{0,1} , *f*_{0,2} } mit jeweiligen zugehörigen Trajektorienwiederholungsraten *fᵣₑₛ* , die zu perfekten stabilen und somit geschlossenen Trajektorien (vgl. Bild 401 in Fig. 4) korrespondieren, eine oder mehrere der festzulegenden, demgegenüber verschobenen Frequenzpaare der Menge M nach den folgenden Beziehungen bestimmt: ${f}_{1} = {f}_{0 , 1} + Δ {f}_{1} mit Δ {f}_{1} = \frac{1}{{n}_{Δ} ⋅ {n}_{2}} ⋅ {f}_{res}$ (5a) ${f}_{2} = {f}_{0 , 2} + Δ {f}_{2} mit Δ {f}_{2} = \frac{1}{{n}_{Δ} ⋅ {n}_{1}} ⋅ {f}_{res} ,$ (5b) wobei ${n}_{Δ} ∈ ℝ$ mit |*n_{Δ}*| > *0* , vorzugsweise mit |*n_{Δ}*| >*1,* gilt und n₁, n₂ ≥ 1 jeweils ganze Zahlen und teilerfremd sind, so dass gilt: ${f}_{0 , 1} = {n}_{1} ⋅ {f}_{res} und {f}_{0 , 2} = {n}_{2} ⋅ {f}_{res} .$ (6)

Hierbei ist zu beachten, dass sich die Frequenzabweichungen Δ*f*₁ und Δ*f*₂ in den Beziehungen (5a) bzw. (5b) auf die dort theoretisch angenommenen idealen Trajektorien zum jeweiligen als Ausgangspunkt der Berechnung dienenden Resonanzfrequenzpaar {*f*_{0,1}, *f*_{0,2}} bezieht, während die tatsächlich aktuell vorliegenden Resonanzfrequenzen davon abweichen können. Die Frequenzabweichungen Δ*f*₁ und Δ*f*₂ in den Beziehungen (5a) bzw. (5b) müssen folglich unterschieden werden von den im tatsächlichen verfahrensgemäßen Betrieb des Mikroscanners auftretenden Differenzfrequenzen zwischen jeweiligen Antriebsfrequenzen und den zugehörigen tatsächlich vorliegenden aktuellen Resonanzfrequenzen zur jeweils selben Achse.

Je höher der Betrag von *n*_{Δ} und damit je geringer die Beträge von Δ*f*₁ bzw. Δ*f*₂ gewählt werden, umso geringer fällt die Verschiebung von Phasendurchlauf zu Phasendurchlauf aus - und daher genügen bei Trajektorien mit bereits sehr hoher Liniendichte geringfügige Verschiebungen, um die im jeweils vorigen Phasendurchlauf noch ausgelassenen Bildanteile im aktuellen Phasendurchlauf zumindest weitgehend zu füllen. Deshalb kann eine solche diskrete Menge M mit zu deren Frequenzpaaren korrespondierenden jeweiligen Trajektorien durch Wahl unterschiedlicher Werten für *n*_{Δ} bestimmt werden, für die jeweils gilt, dass sich Trajektorien ausbilden, die sich kontinuierlich in für die ursprünglich angenommenen doppeltresonanten Trajektorien zum jeweiligen Frequenzpaar {*f*_{0,1}, *f*_{0,2}} ausgelassene Bildbereiche schieben.

Dies gilt dann auch und insbesondere in Bezug auf diejenige Trajektorie, die sich bei den tatsächlichen Resonanzfrequenzen einstellen würde. Gewissermaßen ist gleichsam automatisch gewährleistet, dass die Trajektorie, die sich bei den aktuellen Resonanzfrequenzen ausbildet, sich in die von ihr ausgelassenen Bildanteile schiebt, wenn man sie hin zu solchen Trajektorien bewegt, für die a priori gewährleistet ist, dass sie sich in vorher festgelegten Zeiträumen immer wieder in zuvor nicht erreichte Bildbereiche schiebt. Um das zu gewährleisten, ist der vorgestellte Ansatz aber nur ein möglicher.

Durch eine geschickte Zusammenstellung der Menge M und somit der gewünschten Trajektorien kann gewährleistet werden, dass die Frequenzpaare der Menge M und somit deren zugehörigen Trajektorien die genannte Bedingung erfüllen, grundsätzlich nicht stark von den Resonanzfrequenzen abzuweichen und damit ein stabiles Bild zu erzeugen. Deshalb kann es besonders vorteilhaft sein, die gewünschten Trajektorien nicht nur nach den Beziehungen (5a), (5b) und (6) zusammenzustellen, sondern ein möglichst breites Spektrum an Trajektorien zu bestimmen, die sich kontinuierlich in zunächst ausgelassene Bildbereiche schieben.

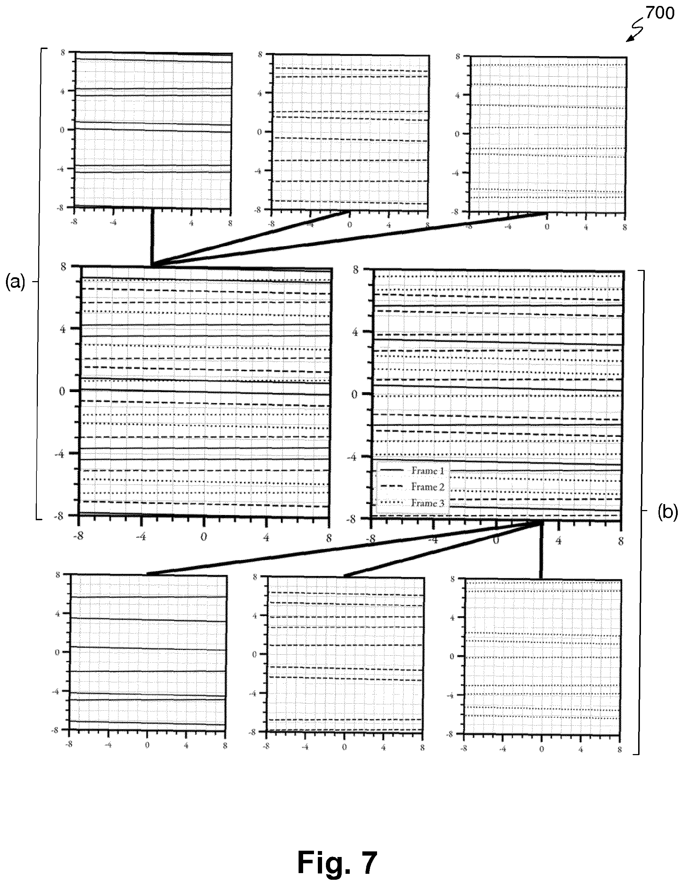

Die Werte für den Parameter *n*_{Δ} können insbesondere so gewählt werden, dass |*n*_{Δ}| ∈ {2, 3, 4, ...} gilt, wobei kleinere Werte bevorzugt sind. Im speziellen Fall *n*_{Δ} = 2, der in **Fig. 7** illustriert ist, werden, wie in der Ausleuchtung 700 des Bildbereichs gezeigt, in jedem Phasendurchlauf, tendenziell die Pixel erreicht, die im vorausgehenden Phasendurchlauf noch nicht erreicht wurden. Betrachtet man die jeweiligen Trajektorienabschnitte zweier unmittelbar aufeinander Phasendurchläufe, wird diesen erkennbar, dass sich die Linien des zweiten Phasendurchlaufs zwischen denjenigen des ersten positionieren.

Dadurch lassen sich, wie nachfolgend im Einzelnen gezeigt werden wird, zwei Frequenzpaare mit *f*₁ = 26314,5806 *Hz* und *f*₂ = 557,2761 *Hz* für das Beispiel aus **Fig. 7(a)** bzw. mit *f*₁ = 26314,2620 *Hz* und *f*₂ = 558,6104 *Hz* für das Beispiel aus **Fig. 7(b)** bestimmen, die im Hinblick auf eine gute Vergleichbarkeit bezüglich ihrer Phasendurchlaufszeiten Tᵣₑₛ bzw. dazu korrespondierenden Trajektorienwiederholraten jeweils in der Nähe derjenigen der bereits in den Figuren 1A bis 1C gezeigten Trajektorien liegen. Die Trajektorie aus Fig. 7 (a) basiert auf einer Trajektorienwiederholrate *fᵣₑₛ* von ungefähr 111 Hz, diejenige aus Fig. 7 (b) dagegen auf einer von etwa 29 Hz. Erneut werden sie unter einer Frame-Rate des zugrundeliegenden Bildmaterials mit einer Bildwiederholfrequenz von 60 Hz untersucht.

Aus Fig. 7 wird direkt ersichtlich, dass die kontinuierliche Verschiebung der Trajektorie über die Zeit dafür sorgt, dass tatsächlich von Frame zu Frame des Bildes tendenziell die Bildanteile erreicht werden, die zuvor ausgelassen wurden. Über einen Zeitraum der jeweils dargestellten 3 Bilder bleiben nun keine größeren Bildinhalte mehr unerreicht. Der Trajektorienverlauf wurde hier durch die spezielle Wahl *n*_{Δ} = 2 so festgelegt, dass die nach der im Rahmen der Trajektorienregelung 230 vorgenommenen Frequenzanpassung entstehende Trajektorie sich von der ursprünglichen Trajektorie aus Fig. 1A (a) bzw. Fig. 1B (a) derart unterscheidet, dass sich die Linien des zweiten Phasendurchlaufs tendenziell genau zwischen diejenigen des ersten Phasendurchlaufs legen und diejenigen der dritten Phasendurchlaufs zwischen diejenigen der zweiten.

Für das Beispiel aus **Fig. 7(a)** ist eine Wiederholrate der Trajektorie von *fᵣₑₛ =* 111,50246 *Hz* zugrunde gelegt. Das ergibt *f*₁ = 236 · 111,5025 *Hz* = 26314,5806 *Hz* und *f*₂ = 5 · 111,5025 *Hz* = 557,5123 *Hz.* Würde man dieses Frequenzpaar als Antriebsfrequenzpaar wählen, ergäbe sich aber ein (unerwünschtes) Bild einer stabilen Trajektorie bei der die unterschiedlich hervorgehobenen Linien aus Fig. 7(a) wie in Fig. 1C (a) zur Deckung kämen. Stattdessen wurde jedoch die Frequenz *f*₂ um eine Frequenzabweichung $Δ {f}_{2} = \frac{1}{2 {n}_{1}} ⋅ {f}_{res} = \frac{1}{2 ⋅ 236} ⋅ 111 , 5025 Hz = 0 , 2362 Hz$ modifiziert, so dass sich folglich die tatsächlich verwendete Antriebsfrequenz *f*₂ = (557,5123 - 0,2362) *Hz* = 557,2761 *Hz* ergibt, die zu der in Fig. 7(a) gezeigten Trajektorie führt. Dabei ist es für die Erreichung einer optimierten Trajektorie irrelevant, ob gemäß verschiedener Varianten Δ*f*₂ addiert oder subtrahiert wird - und ebenfalls, ob man stattdessen oder zusätzlich bezüglich *f*₁ den Wert von $Δ {f}_{1} = \frac{1}{2 {n}_{2}} ⋅ {f}_{res} = \frac{1}{2 ⋅ 5} ⋅ 111 , 50246 Hz = 11 , 1502 Hz$ addiert oder subtrahiert.

Für das weitere Beispiel aus **Fig. 7** **(b)** ist eine Wiederholrate der Trajektorie von *fᵣₑₛ =* 29,40141 *Hz* zugrunde gelegt. Das ergibt *f*₁ = 895 · 29,40141 *Hz* = 26314,2620 *Hz* und *f*₂ = 5 · 29,40141Hz = 558,6268 Hz. Modifiziert man nun wieder die Frequenz *f*₂ um eine Frequenzabweichung $Δ {f}_{2} = \frac{1}{2 {n}_{1}} ⋅ {f}_{res} = \frac{1}{2 ⋅ 895} ⋅ 29 , 40141 Hz = 0 , 0164 Hz$, ergibt sich die optimierte Antriebsfrequenz *f*₂ = (558,6268 - 0,0164) *Hz* = 558,6104 *Hz,* die zu der in Fig. 7(b) gezeigten Trajektorie führt. Wiederum kann hier gemäß verschiedener Varianten wahlweise Δ*f*₂ zu *f*₂ addiert oder davon subtrahiert werden - und/oder bezüglich *f*₁ der Wert von $Δ {f}_{1} = \frac{1}{2 {n}_{2}} ⋅ {f}_{res} = \frac{1}{2 ⋅ 19} ⋅ 29 , 40141 Hz = 0 , 7737 Hz$ addiert oder subtrahiert werden.

Die mit Trajektorienwiederholraten von etwa 111 Hz und etwa 29 Hz, wie in Fig. 7 (a) und (b) verwendet bzw. dargestellt, erzeugen vergleichbar hohe Liniendichten, sodass schließlich der zur Verfügung stehende Wertebereich an Antriebsfrequenzen auf beiden Achsen gerade im Vergleich zur Projektion mittels stabiler Trajektorien erheblich vergrößert werden kann. Simulationen bestätigen den oben gewonnen Eindruck, dass eine prozentual errechnete Ausleuchtung - also im Falle digitaler Bilder die Anzahl getroffener Pixel im Verhältnis zur Anzahl aller Pixel eines Bildes mit vorgegebener Auflösung - für vorgegebene Zeiträume von zum Beispiel 1/30 s etwa gleich hoch ist, gleich, ob die Bildwiederholrate d bei genau diesen 30 Hz oder alternativ bei 60, 90 oder 120 Hz liegt. Folglich ergibt sich sowohl eine deutlich höhere Flexibilität als auch, aufgrund der kontinuierlichen Trajektorienverschiebung, ein im Vergleich zum konventionellen Ansatz homogener ausgeleuchtetes Bild.

Unter Verwendung der vorgenannten ersten und/oder zweiten Ausführungsform zur Bestimmung des Satzes von Frequenzpaaren für die diskrete Menge M, kann ein Phasenregelkreis mit einer Trajektorienregelung, insbesondere Liniendichteregelung, gut kombiniert werden. Insbesondere kann so vermieden werden, dass die Anforderungen der Liniendichteregelung die Phasenregelung zu stark einschränken oder verunmöglichen. Im Vergleich zur konventionellen, reinen Phasenregelung der Antriebssignale werden also nicht mehr lediglich beide Schwingungsachsen des Mikroscanners unabhängig voneinander auf Resonanz, sondern vielmehr das gesamte System auf Lissajous-Trajektorien geregelt, die den beschriebenen Anforderungen alle in ausreichendem Maße, insbesondere etwa gleichermaßen, genügen. Dies ließe sich dann auch so formulieren, dass die Phasenregelung auf beiden Achsen durch die Liniendichteregelung, also mit Hinblick auf eine maximale Ausleuchtung, nach dem vorgestellten Schema diskretisiert wird.

Der Wechsel zwischen Frequenzpaaren, also zwischen jeweils zugeordneten Zeitintervallen, im Rahmen der Trajektorienregelung, erfolgt idealerweise dann, wenn die Trajektorie sich in einem äußeren Bildbereich befindet, da durch die dortige typischerweise hohe Trajektorienliniendichte (vgl. Fig. 1A) eine Änderung der Gestalt der Trajektorie zu diesem Zeitpunkt für den Betrachter in aller Regel in unsichtbarer Weise erfolgt.

Sollte die daraus folgende Frequenzabweichung der Antriebsfrequenzen von den tatsächlichen aktuellen Resonanzfrequenzen so stark werden, dass durch eine damit einhergehende Verringerung der Schwingungsamplitude kein gleichbleibend großes Bild mehr dargestellt wird, kann entweder ein Amplitudenregelkreis ergänzt werden, der dem System entsprechend mehr oder weniger Energie (etwa durch ein Anpassen der Antriebsspannung) zuführt, oder der Resonator auf einer oder beiden Achsen so verstimmt werden, beispielsweise durch gezielte Temperaturänderung, sodass die Resonanzfrequenzen sich den gewählten Antriebsfrequenzen wieder angleichen.

Es ist zudem auch möglich, solche Trajektorien anzunehmen, die Trajektorienwiederholraten aufweisen, die relativ weit, zugleich aber nicht zu weit unter 30 Hz liegen, sodass sich diese erst über eine geringe Anzahl an sichtbaren Teilbildern schließen und bei einer 30Hz Bildwiederholrate nicht einen ganzen Bildframe per Durchlauf abdecken können. Das in **Fig. 6** gezeigte Beispiel wurde genau nach diesem Schema gebildet. Schiebt man demnach die ursprüngliche Trajektorie aus Bild 401 aus Fig. 4 in Richtung dieser Trajektorie, ist wiederum gewährleistet, dass die ursprüngliche Trajektorie sich in die zuvor von ihr ausgelassenen Bildanteile schiebt.

Insgesamt geht es demnach hier darum, eine Lissajous-Trajektorie, die in einem jeweiligen Betrachtungszeitraum Bildanteile auslässt, im nächsten Betrachtungszeitraum gezielt in genau diese Bereiche zu schieben. Das wird hier dadurch erreicht, dass im Sinne einer durch die Menge M definierten Positivliste prinzipiell nur Trajektorien zugelassen sind, für die genau das im Voraus bekannt ist - insbesondere für relevante Betrachtungszeiträume, die sich üblicherweise an der menschlichen Wahrnehmung und der Bildwiederholrate von üblichen Video-Formaten orientieren.

**Fig. 8** zeigt schematisch ein Strahlablenksystem gemäß einer beispielhaften Ausführungsform 800 der vorliegenden Lösung, das insbesondere zur Projektion von Bildern oder Bildfolgen (z.B. bewegten Bildern, Videos usw.) genutzt werden kann. Das Strahlablenksystem 800 weist eine Strahlungsquelle 805 auf, die insbesondere eine Laserquelle sein kann, wobei die Wellenlänge der emittierten Strahlung L₁ insbesondere im sichtbaren Spektralbereich liegen kann, wenngleich anwendungsabhängig auch andere Spektralbereiche genutzt werden können, etwa im Rahmen von Verfahren zur Materialinspektion. Im Folgenden wird, soweit nichts anderes gesagt ist, beispielhaft davon ausgegangen, dass die Strahlung L₁ als Laserstrahl im sichtbaren Spektralbereich emittiert wird.

Der Laserstrahl L₁ ist auf einen Mikroscanner gerichtet, der ein über zwei gekreuzte Federpaare 815, die jeweils eine Schwingungsachse definieren, an einem umlaufenden Rahmen 820 aufgehängtes Ablenkelement 810 in Form einer Spiegelplatte aufweist. Am Ablenkelement 810 wird der Strahl L₁ im Sinne einer optischen Abbildung reflektiert (gespiegelt) und als reflektierter Strahl L₂ auf eine Projektionsfläche 840 im Beobachtungsfeld des Mikroscanners gerichtet.

Das Strahlablenksystem 800 weist des Weiteren eine Steuerungsvorrichtung 825 auf, die eingerichtet ist, die Strahlungsquelle mit zumindest einem Modulationssignal zu versorgen, in Abhängigkeit von dem der Laserstrahl moduliert wird. Die Modulation kann insbesondere seinen zeitlichen oder örtlichen Intensitätsverlauf betreffen. Je nach Typ der Strahlungsquelle sind jedoch auch andere Modulationsarten denkbar, insbesondere Modulationen der Wellenlänge (z.B. Farbe) oder Wellenlängenverteilung der von der Strahlungsquelle 805 emittierten Strahlung. Bei der Projektion von Bildern erfolgt die Modulation entsprechend in Abhängigkeit von der momentanen Ablenkrichtung, so dass entsprechende Bildpunkte auf der Projektionsfläche mit dem zugehörigen Pixelwert des korrespondierenden Bildpunkts des darzustellenden Bildes per Modulation erzeugt werden.

Die Steuerungsvorrichtung 825 ist des Weiteren eingerichtet, eine Antriebseinrichtung des Mikroscanners anzusteuern, um diese, gemäß dem Verfahren aus Fig. 2 zum Antrieb von simultanen Oszillationen des Ablenkelements 810 des Mikroscanners um dessen beide Schwingungsachsen zu veranlassen, sodass der durch den reflektierte Strahl L₂ auf der Projektionsfläche 840 erzeugte Licht- bzw. Strahlungspunkt eine Trajektorie bzw. Bahn in Form einer trajektoriengeregelten Lissajous-Figur 835 durchläuft, die bereits innerhalb eines kurzen Betrachtungszeitraums einen als Bildfläche vorgesehenen Bereich auf der Projektionsfläche vollständig ausleuchtet. Im Falle einer Projektion eines digitalen Bilds, welches aus Pixeln aufgebaut ist, bedeutet dies, dass in dem Betrachtungszeitraums sämtliche Pixel durch die Trajektorie erreicht bzw. dargestellt werden. Die Antriebseinrichtung kann insbesondere zumindest einen Aktuator, insbesondere Piezoaktuator 830 aufweisen. In Fig. 8 sind beispielhaft gemäß einer denkbaren Ausführungsform zwei auf je einer der Federn 815 je Federpaar angebrachte Piezoaktuatoren 830 dargestellt. Auch auf den beiden anderen Federn 815 kann jeweils ein weiterer solcher Piezoaktuator 830 vorgesehen sein.

Die Steuerungsvorrichtung 825 weist je Schwingungsachse einen Phasenregelkreis zur Stabilisierung einer Phasendifferenz zwischen einer Phase der zu der Schwingungsachse korrespondierenden ersten bzw. zweiten Oszillation und einem zugehörigen von dem Phasenregelkreis ausgegebenen Ansteuersignal für die Antriebseinrichtung bezüglich der Schwingungsachse auf. Des Weiteren weist sie eine Frequenzanpassungseinrichtung für den Phasenregelkreis auf, um die Schwingungsfrequenz für ein jeweiliges Zeitintervall mittels Anpassens der Frequenz des Ansteuersignals bezüglich der Schwingungsachse um eine für dieses Zeitintervall gemäß dem Verfahren aus Fig. 2 (oder einer anderen lösungsgemäßen Ausführungsform des Verfahrens) bestimmten Frequenzabweichung zu verstimmen.

Zur Ausführung des Verfahrens kann die Steuerungsvorrichtung 825 insbesondere eine Datenverarbeitungseinrichtung 825a mit einem oder mehreren Prozessoren sowie eine Speichereinrichtung 825b aufweisen. In der Speichereinrichtung 825b kann insbesondere ein Computerprogramm abgelegt sein, das konfiguriert ist, bei seinem Ablaufen auf der Datenverarbeitungseinrichtung bzw. deren zumindest einen Prozessor, die Steuervorrichtung zu veranlassen, das Verfahren auszuführen. Insbesondere kann die Frequenzanpassungseinrichtung ganz oder teilweise auf diese Form softwareimplementiert sein. Zudem kann die Speichereinrichtung dazu dienen, die vorbestimmten Frequenzpaare der Menge M und ggf. die zugehörigen Amplitudenpaare (vgl. Fig. 3) vorzuhalten.

Das Strahlablenksystem 800 kann jedoch auch in Gegenrichtung betreibbar sein, so dass von einem zu beobachtenden Objekt emittierte oder reflektierte Strahlung mittels einer Lissajous-Figur abgetastet und dabei am entsprechend oszillierenden Ablenkelement 810 gespiegelt und in Richtung der Einheit 805 abgebildet wird, wo sich dann zusätzlich oder anstelle einer Laserquelle eine Sensoreinrichtung, insbesondere ein Bildsensor, befinden kann, um die Strahlung sensorisch zu erfassen.

**Fig. 9** zeigt eine beispielhafte Steuerungsvorrichtung 900 zur Trajektorienregelung eines Mikroscanners in Form eines Blockschaltbilds einer beispielhaften Schaltung zur Erzeugung von Steuerungssignalen für eine Antriebseinrichtung eines Lissajous-Mikroscanners, jedoch noch ohne eine lösungsgemäße Trajektorienregelung.

In dem Blockschaltbild aus Fig. 9 stellt der Block 910 die eigentliche Steuerungsvorrichtung als Blockschaltbild dar, während links davon die verschiedenen Eingabesignale (Input) dargestellt sind und die drei nebeneinanderstehenden Blöcke im unteren Teil der Fig. 9 einerseits Detaildarstellungen der Blöcke 912 und 917 aus dem übergeordneten Block 910 sowie rechts unten eine Aufstellung der Ausgabesignale (Output) der Steuerungsvorrichtung 900 darstellen.

Die Steuerungsvorrichtung 900 weist zwei Steuerungspfade auf, nämlich einen für die erste Oszillation um die erste Schwingungsachse A₁ des Ablenkelements 810 und einen für die zweite Oszillation die zweite Schwingungsachse A₂ des Ablenkelements 810. Da sich die Schwingungsfrequenzen für die beiden Oszillationen regelmäßig unterscheiden, werden hier ohne Beschränkung der Allgemeinheit die erste Schwingungsachse A₁ als schnelle Achse (FAST) und die zweite Schwingungsachse A₂ als langsame Achse ("SLOW") bezeichnet. Dasselbe gilt für die entsprechenden Signale und Oszillationen.

Zunächst wird nun auf den Schaltungsanteil zur schnellen Achse eingegangen. Eingangsseitig weist die Steuerungsvorrichtung 900 dazu einen Bandfilter 911 auf, mit dem das Eingangssignal ADC_FAST gefiltert wird. Dieses Eingangssignal ist ein Sensorsignal oder ein davon abgeleitetes Signal, das eine gemessene Lage, d. h. Orientierung bzw. Auslenkung, des Ablenkelements (Mikrospiegel) 810 charakterisiert, z.B. den Auslenkungswinkel. Es beschreibt somit den Ist-Schwingungsverlauf des Ablenkelements 810 bezüglich der schnellen Achse A₁ und kann insbesondere, wie vorliegend, ein digitales Signal sein. Durch die Filterung im Bandfilter 911 wird einerseits unerwünschtes Rauschen entfernt und andererseits eine Bandbegrenzung des Signals auf einen definierten Bandbereich für die nachfolgende Signalverarbeitung erreicht.

Das gefilterte Signal ADC_{down} läuft nun als Eingangssignal in einen digitalen Abwärtswandler (engl. digital down-converter, DDC) 925, der einen QAM-Block 912 aufweist (QAM = Quadratur-Amplituden-Modulation) sowie zwei nachgeschaltete Downsampler (Heruntertakter), davon einen Downsampler 913 für den Realteil Re und einen Downsampler 914 für den Imaginärteil Im, die jeweils eine Herabsetzung der Taktrate um den Faktor 32 bewirken. Der QAM-Block 912 ist im linken unteren Bereich der Fig. 9 nochmals detaillierter dargestellt. Das Eingangssignal ADC_{down} wird durch zwei demodulierende Mischer 931 und 932, die mit derselben (Demodulations-)Frequenz NCO_FREQ aber mit 90° Phasendifferenz betrieben werden, in einen Realteil und einen Imaginärteil aufgeteilt und noch jeweils zum Zwecke der Entfernung von höherfrequenten Störsignalen und Seitenbändern mit einem Tiefpassfilter 934 bzw. 935 gefiltert, so dass sich die bereits genannten Real- und Imaginärteile Re bzw. Im als Ausgangssignale des QAM-Blocks 912 und zugleich Eingangssignale der Downsampler 913 bzw. 914 ergeben. In Summe wandelt der DDC 925 somit das bandlimitierte Eingangssignal ADC_{down} in zwei Teilsignale niedrigerer Frequenz und niedrigerer Abtastrate um, insbesondere um die nachfolgenden Schaltungsstufen vereinfachen zu können. Die beiden Teilsignale, die einen Realteil bzw. einen Imaginärteil repräsentieren, bilden zusammen ein komplexes Ausgangssignal, das den gemessenen Ist-Verlauf der Schwingung des Ablenkelements 810 bezüglich der schnellen, ersten Schwingungsachse A₁ repräsentiert.

Aus dem komplexen Ausgangssignal des DDC 925 werden nun einerseits in einem Block 915 dessen Phase *φ* und andererseits in einem Block 916 dessen Betrag |x| ermittelt und jeweils in den nachfolgenden Block 917 eingespeist, der hier als "PLL" bezeichnet ist, wenngleich er allein noch keine PLL (Phase-Locked-Loop bzw. Phasenregelkreis) im üblichen Sinne darstellt. Der PLL-Block 917 ist im unteren mittleren Teil der Fig. 9 detaillierter dargestellt. Er enthält im Wesentlichen einen Pl-Regler 940 (Proportional-Integral Regler) sowie einen diesem nachgeschalteten Oszillator 941 fester Phasenlage (hier als 0° angegeben) zur Erzeugung der Antriebssignale DRIVE-FAST und PHASE_FAST für die Antriebseinrichtung (z.B. Piezo-Antrieb) zum Antrieb der ersten, schnellen Oszillation des Ablenkelements 810. Der Oszillator ist ein sogenannter numerisch gesteuerter Oszillator (engl. numerically controlled oscillator, NCO). Zudem wird im Signalpfad zwischen dem PI-Regler 940 und dem Oszillator 941 die Frequenz NCO_FREQ des Ausgangssignals des Pl-Reglers 940 als Frequenzsignal abgegriffen und in einer Schleife zum QAM-Block 912 als weiteres Eingangssignal desselben zurückgeführt, sodass sich nun insgesamt eine PLL (Phase-Locked-Loop, Phasenregelkreis) ergibt, bei der dieses rückgeführte Frequenzsignal, das die Frequenz NCO_FREQ repräsentiert (und daher hier auch als NCO_FREQ bezeichnet wird), als Stellgröße dem Phasenregelkreis PLL wirkt.

Jedes Modul bzw. jeder Block der Schaltung, z.B. der PLL-Block 917, ist an ein Taktsignal (Clock-Signal) CLK100 angeschlossen. Mit jeder (in der Regel) steigenden Flanke wird die gesamte Schaltung einmal durchlaufen, sodass auch die Ausgangssignale entsprechend getaktet sind.

Ein Reset-Signal RST setzt die Schaltung, welche zustandsabhängige Ausgänge hat, zurück, falls es mit einer steigenden Flanke positiv, also 1, nicht 0, ist, wodurch der gesamte Zustand des Blocks bzw. aller Blöcke zurückgesetzt wird.

Bei der Inbetriebnahme des Mikroscanners wird die Schwingung des Ablenkelements 810 zunächst "manuell" - das heißt angesichts sichtbaren Aufschwingens per Augenmaß bestimmt oder elektronisch bis zum Überschreiten eines Schwellwertes der Schwingungsamplitude - in Richtung der Resonanzfrequenz "gefahren", in dem die Frequenz NCO_FREQ entsprechend noch ohne Zuhilfenahme der Regelfunktion des Reglers 940 eingestellt wird.

Sodann wird die Regelfunktion des Blocks 917 und somit die PLL bzw. der Phasenregelkreis als Ganzes aktiviert, und insbesondere wird, wie schon erläutert, die Phase *φ* im Block 915 ermittelt. Diese Phase *φ* beschreibt die Phasenlage des als Führungsgröße der Regelung dienenden Ist-Schwingungsverlaufs zur ersten Schwingungsachse A₁, der durch das komplexe Ausgangssignal des DDC 925 repräsentiert wird, bezogen auf die konstante (Referenz-)Phasenlage 0° des Antriebsoszillators 941.

Lässt man Signallaufzeiten und ähnliche Verzerrungen beiseite, sollte die Phase *φ -* man vergleiche hier mit einem Bode-Diagramm eines PT2-Gliedes - bei der Resonanzfrequenz idealerweise exakt 90° betragen. Ist dies nicht der Fall, wird durch den PI-Regler die Frequenz (nicht die Phase, die ja konstant ist) des Antriebsoszillators 941 in die richtige Richtung erhöht oder verringert, bis die genannte Ziel-Phase 90° erreicht ist.

Der Schaltungsteil für die langsame Achse A₂ ist im Prinzip genauso aufgebaut und funktioniert entsprechend auch genauso. Als Unterschied ist hier jedoch aufgrund der niedrigeren Schwingungsfrequenz zu dieser Achse eine geringere Heruntertaktung vorgesehen, so dass die Downsampler 920 den Takt nur um den Faktor zwei heruntersetzen. Auch kann der Bandfilter 918 für ein entsprechend niedriger liegendes Frequenzband als beim korrespondierenden Bandfilter 911 zur schnellen Achse ausgelegt sein und der QAM-Block 919 und wahlweise auch der PLL-Block 924 können entsprechend ebenso frequenzangepasst sein. Die Blöcke 922 und 923 zur Ermittlung von Phase oder Betrag des Ausgangssignals des DDC zur langsamen Achse können in aller Regel den Blöcken 915 bzw. 916 unverändert entsprechen, wenngleich auch hier frequenzabhängige Anpassungen denkbar sind.

**Fig. 10** zeigt ein beispielhaftes, auf Fig. 9 aufbauendes Blockschaltbild 1000 einer Schaltung zur Erzeugung von Steuerungssignalen für eine Antriebseinrichtung eines Lissajous-Mikroscanners mit einer lösungsgemäße Trajektorienregelung.

Da Aufbau und Funktionsweise der entsprechenden Schaltungsteile für die schnelle Achse und die langsame Achse sich auch hier entsprechen, wird im Folgenden nur beispielhaft auf den Schaltungsteil für die schnelle Achse (A₁ bzw. FAST) eingegangen. Entsprechend der Schaltung aus Fig. 9 wird das Eingangssignal ADC_FAST einem Bandfilter 911 und nachfolgend einem DDC-Block 925 mit einem QAM-Block 912 und zwei Downsampling-Blöcken 913 bzw. 914 für Real- bzw. Imaginärteil zugeführt. Danach folgen entlang des Signalverlaufs wieder ein Block 915 zur Bestimmung der Phase und ein Block 916 zur Bestimmung des Betrags des komplexen Ausgangssignals des DDC-Blocks 925.

Der nachgeschaltete PLL-Block 1017 ist gegenüber dem Block 917 aus Fig. 9 so modifiziert, dass er zusätzlich ein Frequenzkorrektursteuerungssignal CORR_FREQ_FAST als Eingangssignal erhält. Das Signal CORR_FREQ_FAST wird in einem zusätzlichen Frequenzkorrekturblock 1042 generiert, der in Fig. 9 nicht vorhanden ist und für eine lösungsgemäße Regelungswirkung der Schaltung 1000 zur Ansteuerung der Antriebseinrichtung für die schnelle Achse A₁ sorgt.

Der Frequenzkorrekturblock 1042 erhält als Eingangssignal bezüglich der schnellen Achse das am PLL-Block 1017 abgegriffene Frequenzsteuerungssignal NCO_FREQ_FAST, mit dem der NCO des PLL-Blocks 1017 angesteuert wird. Das Frequenzsteuerungssignal NCO_FREQ_FAST wird im Frequenzkorrekturblock 1042 in das angepasstes Frequenzsteuerungssignal CORR_FREQ_FAST gewandelt, indem in Abhängigkeit von NCO_FREQ_FAST aus einem Speicher, insbesondere einem ROM, ein passendes Frequenzpaar für angepasste Frequenzen zur schnellen Achse A₁ und zur langsamen Achse A₂ ausgelesen wird und das angepasste Frequenzsteuerungssignal CORR_FREQ_FAST so erzeugt wird, dass es die diesem Frequenzpaar angegebene angepasste Frequenz zur schnellen Achse A₁ repräsentiert.

Für die langsame Achse erfolgt dies entsprechend, wobei das Frequenzsteuerungssignal NCO_FREQ_SLOW im Frequenzkorrekturblock 1042 gemäß dem Verfahren aus Fig. 2 in das angepasstes Frequenzsteuerungssignal CORR_FREQ_SLOW gewandelt wird, sodass das ausgelesene Frequenzpaaren nun durch das Signalpaar (CORR_FREQ_FAST; CORR_FREQ_SLOW) repräsentiert wird.

Die durch CORR_FREQ_FAST repräsentierte angepasste Frequenz, die aus dem ROM ausgelesen wurde, wird - wie schon erläutert - dem QAM-Block 912 als im Sinne einer durch die Frequenzanpassung modifizierten Rückkopplungsschleife als Eingangsgröße zugeführt, da das Ablenkelement 810 mit dieser korrigierten Frequenz angetrieben wird, weshalb zur korrekten Bestimmung der Phase *φ* im Block 915 diese Frequenz auch zuvor zur Demodulation im QAM-Block 912 benutzt werden muss. Dadurch ergibt sich jedoch grundsätzlich eine Abweichung von dem Idealwert von 90° für die Phase *φ,* da aufgrund der vorgenannten Frequenzanpassung im Block 1021 die Frequenz CORR_FREQ_FAST stets leicht neben der aktuellen Resonanzfrequenz der schnellen Achse A₁ liegt. Diese Abweichung fällt aber in der Regel gering aus, dass sie in der Praxis meist keine Rolle spielt. Die durch CORR_FREQ_FAST repräsentierte angepasste Frequenz wird außerdem dem PLL-Block 1017 zugeführt.

Für die langsame Achse gilt wieder das hier zur schnellen Achse Gesagte entsprechend. Insgesamt findet somit eine Diskretisierung der Antriebsfrequenzen NCO_FREQ_FAST und NCO_FREQ_SLOW für den Antrieb des Ablenkelements 810 statt, bei der nur vorausgewählte, im ROM vorab abgelegte Frequenzpaare erlaubt sind, für die vorab bekannt ist, dass sie zu einer verbesserten, insbesondere homogeneren Trajektoriendichte und somit zu einem besseren Abbildungsergebnis führen, als dies ohne die Frequenzanpassung erreicht werden würde. Dies gilt insbesondere für längere Betrachtungszeiträume, bei denen regelmäßig Temperaturänderungen oder sonstige Einflussfaktoren auf die Resonanzfrequenzen zum Tragen kommen würden.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### BEZUGSZEICHENLISTE

- 100: Trajektorie aus Fig. 1
- 200: Verfahren zur Trajektorienregelung
- 205-230: Schritte bzw. Verfahrensabschnitte des Verfahrens 200
- 400: Folge von Trajektorienabschnitten 401 bis 409
- 401-409: Trajektorienabschnitte
- 500: Trajektorie aus Fig. 5
- 600: Ausleuchtung des Bildbereichs in Fig. 6
- 700: Ausleuchtung des Bildbereichs in Fig. 7
- 800: Strahlablenksystem
- 801: Mikroscannersystem, insbesondere zweiachsiger Mikroscanner
- 805: Strahlungsquelle
- 810: Ablenkelement
- 815: Federpaare
- 820: Rahmen
- 825: Steuerungsvorrichtung
- 825a: Datenverarbeitungseinrichtung
- 825b: Speichereinrichtung
- 830: Piezoaktuator
- 835: Lissajous-Figur bzw. Lissajous-Trajektorie
- 840: Projektionsfläche
- 900: Steuerungsvorrichtung ohne Trajektorienregelung
- 910: Block (Steuerung)
- 911: Bandfilter
- 912: QAM-Block
- 913, 914: Downsampler
- 915: Block zur Phasenermittlung
- 916: Block 916 zur Bestimmung des Betrags des komplexen Ausgangssignals des DDC-Blocks 925
- 917: PLL-Block
- 918: Bandfilter
- 919: QAM-Block
- 920, 921: Downsampler
- 922: Block zur Phasenermittlung
- 923: Block 916 z r Betragsbestimmung
- 924: PLL-Block
- 925: DDC-Block
- 930, 933: Oszillator
- 931, 932: Mischer
- 934, 935: Tiefpassfilter
- 940: PI-Regler
- 941: Antriebsoszillator
- 1000: Steuerungsvorrichtung mit Trajektorienregelung
- 1010: Block (Steuerung)
- 1017: PLL-Block
- 1024: PLL-Block
- 1042: Frequenzkorrekturblock

## Patentansprüche

1. Verfahren (200) zur Trajektorienregelung bei einem mehrachsigen Mikroscannersystem (801), wobei das Verfahren (200) aufweist:
Ansteuern (205, 225) einer Antriebseinrichtung für das Mikroscannersystem (801) derart, dass dieses veranlasst wird, eine erste rotatorische Oszillation eines Ablenkelements (810) des Mikroscannersystems (801) um eine erste Schwingungsachse mittels einer Anregung mit einer ersten Antriebsfrequenz und
simultan zur ersten Oszillation eine zweite rotatorische Oszillation eines Ablenkelements (810) des Mikroscannersystems (801) um eine zur ersten Schwingungsachse orthogonale zweite Schwingungsachse mittels einer Anregung mit einer zweiten Antriebsfrequenz anzutreiben, wobei das Ansteuern über eine Mehrzahl von aufeinanderfolgenden Zeitintervallen hinweg im Sinne einer Regelung derart erfolgt, dass:
in jedem der Zeitintervalle für seine jeweilige Dauer die erste und die zweite Antriebsfrequenz jeweils stabil auf einer jeweiligen bestimmten ersten bzw. zweiten Soll-Frequenz gehalten werden, wobei diese beiden Soll-Frequenzen ein diesem Zeitintervall zugeordnetes Frequenzpaar bilden und sich die jeweils zugeordneten Frequenzpaare von zumindest zwei unmittelbar aufeinanderfolgenden Zeitintervallen bezüglich der ersten Soll-Frequenz und/oder der zweiten Soll-Frequenz voneinander unterscheiden; und
für ein jeweiliges Zeitintervall das ihm zugeordnete Frequenzpaar in Abhängigkeit von einem sensorisch erfassten (210) Wert zumindest einer physikalischen Größe, die in einem Abhängigkeitsverhältnis mit der jeweiligen Resonanzfrequenz bezüglich zumindest einer der Schwingungsachsen steht, gemäß einer Auswahlvorschrift aus einer vorbestimmten diskreten Menge von mehreren unterschiedlichen Frequenzpaaren so ausgewählt wird (215), dass das ausgewählte Frequenzpaar bezüglich zumindest einer seiner beiden Frequenzen um eine jeweilige Frequenzabweichung von der gemäß dem Abhängigkeitsverhältnis zu dem erfassten Wert der zumindest einen Größe korrespondierenden Resonanzfrequenz zur selben Schwingungsachse abweicht;
**dadurch gekennzeichnet, dass**
zumindest eines der Frequenzpaare {*f₁; f₂*} der Menge so bestimmt wird, dass ausgehend von einer Phasendurchlauffrequenz *fᵣₑₛ*, die zu einer geschlossenen Lissajous-Trajektorie (835) für ein Paar {*f*_{0,1}, *f*_{0,2}} von möglichen Resonanzfrequenzen des Mikroscannersystems (801) für die beiden Oszillationen korrespondiert, und mit |*n*_{Δ}| >0 gilt:
${f}_{1} = {f}_{0 , 1} + Δ {f}_{1} mit Δ {f}_{1} = \frac{1}{{n}_{Δ} ⋅ {n}_{2}} ⋅ {f}_{res}$ ${f}_{2} = {f}_{0 , 2} + Δ {f}_{2} mit Δ {f}_{2} = \frac{1}{{n}_{Δ} ⋅ {n}_{1}} ⋅ {f}_{res} ,$
wobei und n₁, n₂ ≥ 1 jeweils ganze Zahlen und teilerfremd sind, so dass gilt: ${f}_{0 , 1} = {n}_{1} ⋅ {f}_{res} und {f}_{0 , 2} = {n}_{2} ⋅ {f}_{res} .$

2. Verfahren (200) nach Anspruch 1, wobei gemäß der Auswahlvorschrift für das jeweilige Zeitintervall dasjenige Frequenzpaar aus der Menge ausgewählt (215) wird, das bezüglich zumindest einer seiner beiden Frequenzen eine von Null verschiedene und innerhalb der Menge minimale Frequenzabweichung von der Resonanzfrequenz zur selben Schwingungsachse aufweist, die gemäß dem Abhängigkeitsverhältnis zu dem erfassten Wert der zumindest einen Größe korrespondiert.

3. Verfahren (200) nach einem der vorausgehenden Ansprüche, wobei die jeweilige Dauer jedes Zeitintervalls wenigstens 50%, insbesondere wenigstens 80%, bevorzugt wenigstens 90% der Dauer eines Phasendurchlaufs einer durch reflektierendes Ablenken eines während der simultanen Oszillationen auf das Mikroscannersystem (801) einfallenden elektromagnetischen Strahls in ein Beobachtungsfeld bewirkten Lissajous-Trajektorie (835) gemäß dem dem jeweiligen Zeitintervall zugeordneten Frequenzpaar entspricht.

4. Verfahren (200) nach einem der vorausgehenden Ansprüche, des Weiteren aufweisend:
Bestimmen zumindest eines Frequenzpaares {*f₁; f₂*} der Menge in Abhängigkeit von:
- der Resonanzfrequenz *f*_{*r*,1} des Mikroscannersystems (801) für die erste Schwingungsachse;
- der Resonanzfrequenz *f*_{*r*,2} des Mikroscannersystems (801) für die zweite Schwingungsachse; und
- zumindest einem vorbestimmten Linienabstandswert oder einer dafür festgelegten Obergrenze, der bzw. die einen während eines vollständigen Phasendurchlaufs auftretenden maximalen Linienabstand benachbarter Linien der Lissajous-Trajektorie (835) kennzeichnen.

5. Verfahren (200) nach einem der vorausgehenden Ansprüche, wobei die physikalische Größe einen der folgenden Zustände des Mikroscannersystems (801) oder eine Kombination von zumindest zwei dieser Zustände oder Zustandsveränderungen charakterisiert oder davon abhängt:
- eine Verschiebung einer gemessenen Resonanzfrequenz zumindest einer der Oszillationen;
- eine Temperatur;
- eine mechanische Spannung oder Dehnung;
- eine Schwingungsamplitude des bzw. eines Ablenkelements (810);
- eine bei zumindest einer der Oszillationen auftretende Phaseninstabilität;
- ein der jeweiligen Stellgröße eines Phasenregelkreises für die Phase zumindest einer der Oszillationen;
- eine Phasendifferenz zwischen einem Antriebssignal zur Ansteuerung der Antriebseinrichtung und einem Messsignal, das eine gemessene Auslenkung des Ablenkelements (810) repräsentiert;
- eine Veränderung der eingestrahlten elektromagnetischen Strahlungsleistung, die das Ablenkelement (810) durch Absorption aufnimmt;
- eine Veränderung eines Schwingungszustands eines Referenzoszillators im Mikroscannersystem (801), der mit einem Schwingungszustand des bzw. zumindest eines Ablenkelements (810) korreliert ist.

6. Verfahren (200) nach einem der vorausgehenden Ansprüche, wobei der Wert der zumindest einen physikalischen Größe in Abhängigkeit von der die Auswahl des jeweiligen zugeordneten Frequenzpaars für ein jeweiliges Zeitintervall erfolgt, während des diesem Zeitintervall unmittelbar vorausgehenden Zeitintervalls erfasst wird.

7. Verfahren (200) nach einem der vorausgehenden Ansprüche, wobei der Wechsel zwischen aufeinanderfolgenden Zeitintervallen im Rahmen der Ansteuerung jeweils zu einem Zeitpunkt erfolgt, an dem die Trajektorie (835) der Lissajous-Projektion einen Abstand zum Zentrum des von der Trajektorie (835) innerhalb ihres vollständigen Phasendurchlaufs ausgeleuchteten Beobachtungsfelds aufweist, der zumindest 80% des maximal auftretenden Abstands eines Punkts auf der Trajektorie (835) von dem Zentrum entspricht.

8. Verfahren (200) nach einem der vorausgehenden Ansprüche, wobei die Frequenzpaare der diskreten Menge vorab in einer Speichereinrichtung vorgehalten werden und daraus für zumindest eines der Zeitintervalle in Abhängigkeit von dem sensorisch erfassten Wert der zumindest einen physikalischen Größe gemäß der Auswahlvorschrift für jedes Zeitintervall sein zugeordnetes Frequenzpaar ausgewählt wird.

9. Verfahren (200) nach einem der vorausgehenden Ansprüche, wobei im Rahmen der Ansteuerung für zumindest eines der Zeitintervalle das zugeordnete Frequenzpaar dynamisch während des Verfahrensablaufs mittels einer durch die Auswahlvorschrift festgelegten Rechenvorschrift, welche die diskrete Menge definiert, in Abhängigkeit von dem sensorisch erfassten Wert der zumindest einen physikalischen Größe bestimmt wird.

10. Verfahren (200) nach einem der vorausgehenden Ansprüche, wobei zusätzlich zu dem Auswählen eines jeweiligen zugeordneten Frequenzpaares für jedes Zeitintervall auch eine diesem Zeitintervall zugeordnete Soll-Amplitudenverstärkung bezüglich zumindest einer der beiden Schwingungsachsen ausgewählt wird; und
während des jeweiligen Zeitintervalls die Ansteuerung der Antriebseinrichtung einschließlich einer durch die zugeordnete Soll-Amplitudenverstärkung konfigurierten jeweiligen Amplitudenverstärkung bezüglich dieser zumindest einen Schwingungsachse erfolgt.

11. Verfahren (200) nach einem der vorausgehenden Ansprüche, wobei:
das Mikroscannersystem (801) so konfigurierbar ist, dass seine jeweilige Resonanzfrequenz bezüglich zumindest einer der Schwingungsachsen mittels entsprechender Anpassung zumindest eines Konfigurationsparameters des Mikroscannersystems (801) verstimmt werden kann; und
für zumindest eines der Zeitintervalle zusätzlich zu dem Auswählen eines jeweiligen zugeordneten Frequenzpaares auch eine Resonanzfrequenzverstimmung des Mikroscannersystems (801) bezüglich der zumindest einen Schwingungsachse mittels Einstellens des zumindest einen Konfigurationsparameters erfolgt.

12. Steuerungsvorrichtung (825; 1000) zur Trajektorienregelung eines Mikroscannersystems (801), wobei die Steuerungsvorrichtung (825; 1000) zum Ansteuern einer Antriebseinrichtung für ein Mikroscannersystem (801) gemäß dem Verfahren (200) nach einem der vorausgehenden Ansprüche konfiguriert ist.

13. Steuerungsvorrichtung (825; 1000) nach Anspruch 12, aufweisend für zumindest eine der beiden Schwingungsachsen:
einen Phasenregelkreis zur Stabilisierung einer Phasendifferenz zwischen einer Phase der zu der Schwingungsachse korrespondierenden ersten bzw. zweiten Oszillation und einem zugehörigen von dem Phasenregelkreis ausgegebenen Ansteuersignal für die Antriebseinrichtung bezüglich der Schwingungsachse; und
eine Frequenzanpassungseinrichtung für den Phasenregelkreis, die konfiguriert ist, eine Führungsgröße des Phasenregelkreises in Abhängigkeit von einer für dieses Zeitintervall gemäß dem Verfahren (200) bestimmten Soll-Frequenz bezüglich der Schwingungsachse anzupassen.

14. Computerprogramm mit Befehlen, die bewirken, dass die Steuerungsvorrichtung (825; 1000) nach Anspruch 12 oder 13 das Verfahren (200) nach einem der Ansprüche 1 bis 11 ausführt.

15. Strahlablenksystem (800), aufweisend:
ein mehrachsiges Mikroscannersystem (801) mit zumindest einem Ablenkelement (810), das eine erste rotatorische Oszillation um eine erste Schwingungsachse ausführen kann und mit zumindest einem Ablenkelement (810) das simultan zur ersten Oszillation eine zweite rotatorische Oszillation um eine zur ersten Schwingungsachse orthogonale zweite Schwingungsachse ausführen kann, um durch reflektierendes Ablenken eines während der simultanen Oszillationen auf das Mikroscannersystem (801) einfallenden elektromagnetischen Strahlseine Lissajous-Projektion in ein Beobachtungsfeld zu bewirken;
eine Antriebseinrichtung zum Antrieb zumindest einer der Oszillationen des Mikroscannersystems (801); und
eine Steuerungsvorrichtung (825; 1000) nach Anspruch 12 oder 13 zum Ansteuern der Antriebseinrichtung gemäß dem Verfahren (200) nach einem der Ansprüche 1 bis 11.

## Claims

1. A method (200) for trajectory regulation in a multi-axis micro-scanner system (801), wherein the method (200) comprises:
controlling (205, 225) a drive device for the micro-scanner system (801) in such a way that the latter is caused to drive a first rotary oscillation of a deflection element (810) of the micro-scanner system (801) about a first oscillation axis by means of an excitation with a first drive frequency and, simultaneously with the first oscillation, a second rotary oscillation of a deflection element (810) of the micro-scanner system (801) about a second oscillation axis orthogonal to the first oscillation axis by means of an excitation with a second drive frequency, wherein the control takes place over a plurality of successive time intervals in the sense of a regulation, in such a way that:
in each of the time intervals for its respective duration, the first and the second drive frequency are each kept stable at a respective specific first and second target frequency, wherein these two target frequencies form a frequency pair associated with this time interval and the respectively assigned frequency pairs of at least two immediately consecutive time intervals differ from one another with respect to the first target frequency and/or the second target frequency; and
for a respective time interval, the frequency pair associated with it is selected from a predetermined discrete set of several different frequency pairs (215) according to a selection rule as a function of a sensor-detected (210) value of at least one physical variable which is in a dependency relationship with the respective resonance frequency with respect to at least one of the oscillation axes, such that the selected frequency pair deviates with respect to at least one of its two frequencies by a respective frequency deviation from the resonance frequency relative to the same oscillation axis according to the dependency relationship with the detected value of the at least one variable;
**characterized in that** at least one of the frequency pairs {*f₁; f₂*} of the set is determined such that, starting from a phase pass frequency *fᵣₑₛ*, which corresponds to a closed Lissajous trajectory (835) for a pair {*f*_{0,1}, *f*_{0,2}} of possible resonance frequencies of the micro-scanner system (801) for the two oscillations, and with |*n*_{Δ}| >0, the following applies: ${f}_{1} = {f}_{0 , 1} + Δ {f}_{1} mit Δ {f}_{1} = \frac{1}{{n}_{Δ} ⋅ {n}_{2}} ⋅ {f}_{res}$ ${f}_{2} = {f}_{0 , 2} + Δ {f}_{2} mit Δ {f}_{2} = \frac{1}{{n}_{Δ} ⋅ {n}_{1}} ⋅ {f}_{res} ,$ wherein and n1, n2 ≥ 1 are each integers and coprimes, so that the following applies: ${f}_{0 , 1} = {n}_{1} ⋅ {f}_{res} und {f}_{0 , 2} = {n}_{2} ⋅ {f}_{res} .$

2. The method (200) according to claim 1, wherein, according to the selection rule for the respective time interval, that frequency pair is selected (215) from the set which, with respect to at least one of its two frequencies, has a frequency deviation from the resonance frequency to the same oscillation axis which is different from zero and minimal within the set and which corresponds to the detected value of the at least one variable according to the dependency relationship.

3. The method (200) according to any one of the preceding claims, wherein the respective duration of each time interval corresponds to at least 50%, in particular at least 80%, preferably at least 90%, of the duration of a phase pass of a Lissajous trajectory (835) caused by a reflecting deflection of an electromagnetic beam incident on the micro-scanner system (801) during the simultaneous oscillations into an observation field according to the frequency pair associated with the respective time interval.

4. The method (200) according to any one of the preceding claims, further comprising:
determining at least one frequency pair {*f₁; f₂*} of the set depending on:
the resonance frequency *f*_{*r*,1} of the micro-scanner system (801) for the first oscillation axis;
the resonance frequency *f*_{*r*,2} of the micro-scanner system (801) for the second oscillation axis; and
at least one predetermined line spacing value or an upper limit defined therefor, which characterizes a maximum line spacing between adjacent lines of the Lissajous trajectory (835) occurring during a complete phase pass.

5. The method (200) according to any one of the preceding claims, wherein the physical variable characterizes or depends on one of the following states of the micro-scanner system (801) or a combination of at least two of these states or state changes:
a shift of a measured resonance frequency of at least one of the oscillations;
a temperature;
a mechanical stress or strain;
an oscillation amplitude of the or a deflection element (810);
a phase instability occurring in at least one of the oscillations;
one of the respective manipulated variables of a phase-locked loop for the phase of at least one of the oscillations;
a phase difference between a drive signal for controlling the drive device and a measurement signal representing a measured deflection of the deflection element (810);
a change in the incident electromagnetic radiation power which the deflection element (810) receives by absorption;
a change in an oscillation state of a reference oscillator in the micro-scanner system (801), which is correlated with an oscillation state of the or at least one deflection element (810).

6. The method (200) according to any one of the preceding claims, wherein the value of the at least one physical variable depending on which the selection of the respective associated frequency pair for a respective time interval is made is detected during the time interval immediately preceding that time interval.

7. The method (200) according to any one of the preceding claims, wherein the change between successive time intervals within the scope of the control takes place in each case at a time at which the trajectory (835) of the Lissajous projection has a distance from the center of the observation field illuminated by the trajectory (835) within its complete phase pass, which corresponds to at least 80% of the maximum occurring distance of a point on the trajectory (835) from the center.

8. The method (200) according to any one of the preceding claims, wherein the frequency pairs of the discrete set are stored in advance in a storage device and from this, for at least one of the time intervals, its associated frequency pair is selected as a function of the sensor-detected value of the at least one physical variable according to the selection rule for each time interval.

9. The method (200) according to any one of the preceding claims, wherein in the context of the control for at least one of the time intervals, the associated frequency pair is determined dynamically during the method by means of a calculation rule, which is determined by the selection rule and defines the discrete set, as a function of the sensor-detected value of the at least one physical variable.

10. The method (200) according to any one of the preceding claims, wherein in addition to selecting a respective associated frequency pair for each time interval, a target amplitude gain associated with this time interval is also selected with respect to at least one of the two oscillation axes; and
during the respective time interval, the drive device is controlled including a respective amplitude amplification configured by the associated target amplitude gain with respect to this at least one oscillation axis.

11. The method (200) according to any one of the preceding claims, wherein:
the micro-scanner system (801) is configurable such that its respective resonance frequency can be detuned with respect to at least one of the oscillation axes by appropriately adjusting at least one configuration parameter of the micro-scanner system (801); and
for at least one of the time intervals, in addition to selecting a respective associated frequency pair, a resonance frequency detuning of the micro-scanner system (801) with respect to the at least one oscillation axis is then carried out by setting the at least one configuration parameter.

12. A control device (825; 1000) for trajectory regulation of a micro-scanner system (801), wherein the control device (825; 1000) is configured to control a drive device for a micro-scanner system (801) according to the method (200) according to any one of the preceding claims.

13. The control device (825; 1000) according to claim 12, comprising for at least one of the two oscillation axes:
a phase-locked loop for stabilizing a phase difference between a phase of the first or second oscillation corresponding to the oscillation axis and a corresponding drive signal output from the phase-locked loop for the drive device with respect to the oscillation axis; and
a frequency adjustment device for the phase-locked loop, which is configured to adjust a reference variable of the phase-locked loop in dependence on a target frequency determined for this time interval according to the method (200) with respect to the oscillation axis.

14. A computer program with instructions, which cause the control device (825; 1000) according to claim 12 or 13 to carry out the method (200) according to any one of claims 1 to 11.

15. A beam deflection system (800), comprising:
a multi-axis micro-scanner system (801) with at least one deflection element (810), which can carry out a first rotational oscillation around a first oscillation axis and with at least one deflection element (810) which can carry out a second rotational oscillation around a second oscillation axis orthogonal to the first oscillation axis, simultaneously with the first oscillation, in order to be able to cause a Lissajous projection in an observation field by reflective deflection of an electromagnetic beam incident on the micro-scanner system (801) during the simultaneous oscillations;
a drive device for driving at least one of the oscillations of the micro-scanner system (801); and
a control device (825; 1000) according to claim 12 or 13 for controlling the drive device according to the method (200) according to any one of claims 1 to 11.

## Revendications

1. Procédé (200) de régulation de trajectoire dans un système de micro-scanner multiaxial (801), le procédé (200) comprenant :
la commande (205, 225) d'un dispositif d'entraînement pour le système de micro-scanner (801) de telle sorte que celui-ci est amené à entraîner une première oscillation rotative d'un élément de déviation (810) du système de micro-scanner (801) autour d'un premier axe d'oscillation au moyen d'une excitation à une première fréquence d'entraînement et, simultanément à la première oscillation,
une deuxième oscillation rotative d'un élément de déviation (810) du système de micro-scanner (801) autour d'un deuxième axe d'oscillation orthogonal au premier axe d'oscillation au moyen d'une excitation à une deuxième fréquence d'entraînement, la commande s'effectuant sur une pluralité d'intervalles de temps successifs dans le sens d'une régulation de telle sorte que :
dans chacun des intervalles de temps, pendant sa durée respective, la première et la deuxième fréquence d'entraînement sont maintenues chacune de manière stable à une première ou une deuxième fréquence de consigne déterminée respective, ces deux fréquences de consigne formant une paire de fréquences associée à cet intervalle de temps et les paires de fréquences respectivement associées d'au moins deux intervalles de temps directement successifs se distinguant l'une de l'autre par rapport à la première fréquence de consigne et/ou à la deuxième fréquence de consigne ; et
pour un intervalle de temps respectif, la paire de fréquences qui lui est associée est sélectionnée (215) en fonction d'une valeur détectée par capteur (210) d'au moins une grandeur physique qui est dans un rapport de dépendance avec la fréquence de résonance respective par rapport à au moins l'un des axes d'oscillation, selon une règle de sélection à partir d'un ensemble discret prédéterminé de plusieurs paires de fréquences différentes de telle sorte que la paire de fréquences sélectionnée s'écarte, par rapport à au moins l'une de ses deux fréquences, d'un écart de fréquence respectif de la fréquence de résonance correspondant selon le rapport de dépendance à la valeur détectée de l'au moins une grandeur par rapport au même axe d'oscillation ;
**caractérisé en ce qu'**au moins l'une des paires de fréquences {*f₁* ; *f₂*} de l'ensemble est déterminée de telle sorte que, à partir d'une fréquence de balayage de phase *fᵣₑₛ* qui correspond à une trajectoire de Lissajous fermée (835) pour une paire {*f*_{0,1}, *f*_{0,2}} de fréquences de résonance possibles du système de micro-scanner (801) pour les deux oscillations, et avec |*n*_{Δ}| >0, on a : ${f}_{1} = {f}_{0 , 1} + Δ {f}_{1} mit Δ {f}_{1} = \frac{1}{{n}_{Δ} ⋅ {n}_{2}} ⋅ {f}_{res}$ ${f}_{2} = {f}_{0 , 2} + Δ {f}_{2} mit Δ {f}_{2} = \frac{1}{{n}_{Δ} ⋅ {n}_{1}} ⋅ {f}_{res} ,$
où et n₁, n₂ ≥ 1 sont chacun des nombres entiers et premiers entre eux, de sorte que : ${f}_{0 , 1} = {n}_{1} ⋅ {f}_{res} et {f}_{0 , 2} = {n}_{2} ⋅ {f}_{res} .$

2. Procédé (200) selon la revendication 1, dans lequel, selon la règle de sélection pour l'intervalle de temps respectif, la paire de fréquences est sélectionnée (215) dans l'ensemble qui présente, par rapport à au moins l'une de ses deux fréquences, un écart de fréquence différent de zéro et minimal à l'intérieur de l'ensemble de la fréquence de résonance par rapport au même axe d'oscillation, qui correspond selon le rapport de dépendance à la valeur détectée de l'au moins une grandeur.

3. Procédé (200) selon l'une des revendications précédentes, dans lequel la durée respective de chaque intervalle de temps correspond à au moins 50 %, en particulier au moins 80 %, de préférence au moins 90 % de la durée d'un balayage de phase d'une trajectoire de Lissajous (835) provoquée par une déviation réfléchissante d'un faisceau électromagnétique incident sur le système de micro-scanner (801) pendant les oscillations simultanées dans un champ d'observation selon la paire de fréquences associée à l'intervalle de temps respectif.

4. Procédé (200) selon l'une des revendications précédentes, comprenant en outre :
la détermination d'au moins une paire de fréquences {*f₁* ; *f₂*} de l'ensemble en fonction de :
- la fréquence de résonance *f*_{*r*,1} du système de micro-scanner (801) pour le premier axe d'oscillation ;
- la fréquence de résonance *f*_{*r*,2} du système de micro-scanner (801) pour le deuxième axe d'oscillation ; et
- au moins une valeur de distance de ligne prédéterminée ou une limite supérieure fixée à cette valeur, qui caractérise une distance de ligne maximale de lignes adjacentes de la trajectoire de Lissajous (835) se produisant pendant un balayage de phase complet.

5. Procédé (200) selon l'une des revendications précédentes, dans lequel la grandeur physique caractérise ou dépend de l'un des états suivants du système de micro-scanner (801) ou d'une combinaison d'au moins deux de ces états ou changements d'état :
- un décalage d'une fréquence de résonance mesurée d'au moins l'une des oscillations ;
- une température ;
- une contrainte ou une déformation mécanique ;
- une amplitude d'oscillation du ou d'un élément de déviation (810) ;
- une instabilité de phase se produisant lors d'au moins l'une des oscillations
- une grandeur de réglage respective d'un circuit de régulation de phase pour la phase d'au moins l'une des oscillations ;
- une différence de phase entre un signal d'entraînement pour la commande du dispositif d'entraînement et un signal de mesure qui représente une déviation mesurée de l'élément de déviation (810) ;
- une modification de la puissance de rayonnement électromagnétique irradiée que l'élément de déviation (810) absorbe par absorption ;
- une modification d'un état d'oscillation d'un oscillateur de référence dans le système de micro-scanner (801), qui est corrélé à un état d'oscillation du ou d'au moins un élément de déviation (810).

6. Procédé (200) selon l'une des revendications précédentes, dans lequel la valeur de l'au moins une grandeur physique est détectée en fonction de la sélection de la paire de fréquences associée respective pour un intervalle de temps respectif, pendant l'intervalle de temps directement précédant cet intervalle de temps.

7. Procédé (200) selon l'une des revendications précédentes, dans lequel le changement entre des intervalles de temps successifs dans le cadre de la commande s'effectue à un moment où la trajectoire (835) de la projection de Lissajous présente une distance par rapport au centre du champ d'observation éclairé par la trajectoire (835) dans son balayage de phase complet, qui correspond à au moins 80 % de la distance maximale d'un point sur la trajectoire (835) par rapport au centre.

8. Procédé (200) selon l'une des revendications précédentes, dans lequel les paires de fréquences de l'ensemble discret sont conservées au préalable dans un dispositif de mémoire et, à partir de celles-ci, pour au moins l'un des intervalles de temps, en fonction de la valeur détectée par capteur de l'au moins une grandeur physique selon la règle de sélection pour chaque intervalle de temps, sa paire de fréquences associée est sélectionnée.

9. Procédé (200) selon l'une des revendications précédentes, dans lequel, dans le cadre de la commande pour au moins l'un des intervalles de temps, la paire de fréquences associée est déterminée dynamiquement pendant le déroulement du procédé au moyen d'une règle de calcul fixée par la règle de sélection, qui définit l'ensemble discret, en fonction de la valeur détectée par capteur de l'au moins une grandeur physique.

10. Procédé (200) selon l'une des revendications précédentes, dans lequel, en plus de la sélection d'une paire de fréquences associée respective pour chaque intervalle de temps, une amplification d'amplitude de consigne associée à cet intervalle de temps est également sélectionnée par rapport à au moins l'un des deux axes d'oscillation ; et
pendant l'intervalle de temps respectif, la commande du dispositif d'entraînement s'effectue y compris une amplification d'amplitude respective configurée par l'amplification d'amplitude de consigne associée par rapport à cet au moins un axe d'oscillation.

11. Procédé (200) selon l'une des revendications précédentes, dans lequel :
le système de micro-scanner (801) peut être configuré de telle sorte que sa fréquence de résonance respective par rapport à au moins l'un des axes d'oscillation peut être désaccordée au moyen d'une adaptation correspondante d'au moins un paramètre de configuration du système de micro-scanner (801) ; et
pour au moins l'un des intervalles de temps, en plus de la sélection d'une paire de fréquences associée respective, un désaccord de fréquence de résonance du système de micro-scanner (801) par rapport à l'au moins un axe d'oscillation s'effectue également au moyen du réglage de l'au moins un paramètre de configuration.

12. Dispositif de commande (825 ; 1000) pour la régulation de trajectoire d'un système de micro-scanner (801), le dispositif de commande (825 ; 1000) étant configuré pour commander un dispositif d'entraînement pour un système de micro-scanner (801) selon le procédé (200) selon l'une des revendications précédentes.

13. Dispositif de commande (825 ; 1000) selon la revendication 12, comprenant pour au moins l'un des deux axes d'oscillation :
un circuit de régulation de phase pour stabiliser une différence de phase entre une phase de la première ou de la deuxième oscillation correspondant à l'axe d'oscillation et un signal de commande associé délivré par le circuit de régulation de phase pour le dispositif d'entraînement par rapport à l'axe d'oscillation ; et
un dispositif d'adaptation de fréquence pour le circuit de régulation de phase, qui est configuré pour adapter une grandeur de référence du circuit de régulation de phase en fonction d'une fréquence de consigne déterminée pour cet intervalle de temps selon le procédé (200) par rapport à l'axe d'oscillation.

14. Programme informatique comprenant des instructions qui amènent le dispositif de commande (825 ; 1000) selon la revendication 12 ou 13 à exécuter le procédé (200) selon l'une des revendications 1 à 11.

15. Système de déviation de faisceau (800), comprenant :
un système de micro-scanner multiaxial (801) comprenant au moins un élément de déviation (810) qui peut effectuer une première oscillation rotative autour d'un premier axe d'oscillation et comprenant au moins un élément de déviation (810) qui peut effectuer, simultanément à la première oscillation, une deuxième oscillation rotative autour d'un deuxième axe d'oscillation orthogonal au premier axe d'oscillation, afin de provoquer une projection de Lissajous dans un champ d'observation par déviation réfléchissante d'un faisceau électromagnétique incident sur le système de micro-scanner (801) pendant les oscillations simultanées ;
un dispositif d'entraînement pour entraîner au moins l'une des oscillations du système de micro-scanner (801) ; et
un dispositif de commande (825 ; 1000) selon la revendication 12 ou 13 pour commander le dispositif d'entraînement selon le procédé (200) selon l'une des revendications 1 à 11.
